# EUROPEAN PATENT APPLICATION

(11) **EP 4 258 202 A1**
(43) Date of publication of application: **11.10.2023**
(21) Application number: 21900513.9
(22) Date of filing: 26.11.2021
(51) Int. Cl.: G06Q 50/04, G06F 30/18, G06F 113/14

(54) **PROGRAM, METHOD, AND SYSTEM**

(30) Priority: 03.12.2020 JP 2020201345
(71) Applicant: Plantstream Inc., Tokyo 104-0032 (JP)
(72) Inventor: SAKAI Fumitaka, Tokyo 104-0032 (JP); OHKITA Naohisa, Tokyo 104-0032 (JP); ODA Takeshi, Tokyo 104-0032 (JP); NARUE Seitaro, Yokohama-shi, Kanagawa 220-8765 (JP); SAKAI Fumiaki, Yokohama-shi, Kanagawa 220-8765 (JP)
(74) Representative: AWA Sweden AB
(86) International application number: PCT/JP2021/043467
(87) International publication number: WO 2022/118759

(57) **Abstract**

A program according to the present disclosure is for designing a plant. The program causes the processor to perform: receiving a specification of a position of a rack in a virtual space; receiving a setting of a pipe to be arranged in a layer indicating one of tiers into which the rack is partitioned in a height direction; receiving, from a user, an operation of arranging a first object and a second object in the virtual space, the first object being a piece of equipment having a start point, the second object being a piece of equipment having an end point; determining a passable layer based on a type of the pipe and setting a piping path through which the pipe is to pass; and performing pipe routing to connect a plurality of the pieces of equipment with the pipe based on the piping path and positions of the start point and the end point.

## Description

### [Technical Field]

The present disclosure relates to a program, a method, and a system.

### [Background Art]

To build a large-scale facility such as a chemical plant, various facilities are arranged appropriately, pieces of equipment are arranged, and then routing of pipes connecting the pieces of equipment and supplying various types of fluids is performed. Pipe routing that is performed in a stage of designing a plant needs examination of various types of factors such as requirements based on position relationships among pieces of equipment constituting the plant, conditions of sizes of pipes selected based on electric powers to be supplied to the pieces of equipment, and maintainability, requiring an enormous number of operations. To assist such operations, a design tool such as CAD is used to perform various types of design such as arrangement of various pieces of equipment and routing of pipes.

Patent Literature 1 discloses a technique of a piping route creation apparatus that is used in a stage of designing a plant. In the technique, to improve efficiency of a process of automatically determining piping routes, positions of the piping routes are adjusted with alignment guides that serve as target positions of pipes, a plurality of piping routes are aligned, interference between pipes is avoided, and intervals of pipes are made constant.

### [Citation List]

### [Patent Literature]

**[Patent Literature 1]** Japanese Patent Laid-Open No. 2019-106141

### [Summary of Invention]

### [Technical Problem]

Pipe routing in the design of a facility such as a chemical plant is performed with racks that are arranged passing between various pieces of equipment such as pumps and heat exchangers. At this time, the rack often has a tiered structure. Thus, it is necessary to examine a space where pipes are arranged, for each tier of the rack. However, the routing system described in Patent Literature 1 does not support such arrangement of a space for each tier of the rack.

Therefore, the present disclosure has an objective to provide a pipe routing system that is capable of examining an operation of routing pipes that connect various pieces of equipment for each tier of a rack.

### [Solution to Problem]

A program according to the present disclosure causes a processor to perform: receiving a specification of a position of a rack in a virtual space; receiving a setting of a pipe to be arranged in a layer indicating one of tiers into which the rack is partitioned in a height direction; receiving, from a user, an operation of arranging a first object and a second object in a virtual space, the first object being a piece of equipment having a start point, the second object being a piece of equipment having an end point; determining a passable layer based on a type of the pipe and setting a piping path through which the pipe is to pass; and performing pipe routing to connect a plurality of the pieces of equipment with the pipe based on the piping path and positions of the start point and the end point.

### [Advantageous Effect of Invention]

According to the present disclosure, an operation of routing pipes that connect various pieces of equipment can be examined for each tier of a rack.

### [Brief Description of Drawings]

[Figure 1] Figure 1 is a diagram illustrating a general configuration of a pipe routing system 1.
[Figure 2] Figure 2 is a block diagram illustrating a functional configuration of a terminal device included in the pipe routing system 1.
[Figure 3] Figure 3 is a diagram illustrating a functional configuration of a server included in the pipe routing system 1.
[Figure 4] Figure 4 is a diagram illustrating an example of a data structure of an equipment database stored in the server.
[Figure 5] Figure 5 is a diagram illustrating an example of a data structure of a design space database stored in the server.
[Figure 6] Figure 6 is a diagram illustrating types of pieces of equipment treated in the pipe routing system 1.
[Figure 7] Figure 7 is a diagram illustrating an example of a data structure of a pipe information database 2023 stored in the server.
[Figure 8] Figure 8 is a diagram illustrating an example of a data structure of a design parameter database 2024 stored in the server.
[Figure 9] Figure 9 is a diagram illustrating an example of a data structure of a rack position information database stored in the server.
[Figure 10] Figure 10 is a diagram illustrating an example of a data structure of an equipment position information database stored in the server.
[Figure 11] Figure 11 is a chart illustrating an entire pipe routing process by the pipe routing system 1.
[Figure 12] Figure 12 is a diagram illustrating an example of an operation screen in a state where racks and pieces of equipment are arranged in a three-dimensional space.
[Figure 13] Figure 13 is a diagram illustrating an example of an operation screen when a layer and a region in which a pipe is to be laid is specified.
[Figure 14] Figure 14 is a diagram illustrating an example of an operation screen on a terminal device 10 when a piping path is set.
[Figure 15] Figure 15 is a diagram illustrating details of a pipe routing process.
[Figure 16] Figure 16 is a diagram illustrating a process of necessity determination of a rack.
[Figure 17] Figure 17 is a diagram illustrating a process in which the piping path is determined.
[Figure 18] Figure 18 is a chart illustrating a process of determining a routing method with properties of pieces of equipment.
[Figure 19] Figure 19 is a chart illustrating a process of determining a routing method based on a position relationship between pieces of equipment.
[Figure 20] Figure 20 is a diagram for describing various routing methods.
[Figure 21] Figure 21 is a diagram illustrating a state of various pieces of equipment that are routed by the various routing methods.
[Figure 22] Figure 22 is a diagram illustrating an example of the operation screen on the terminal device 10 when the pipe routing is performed.
[Figure 23] Figure 23 is a diagram illustrating appearance of a main rack and a sub rack in a three-dimensional space.
[Figure 24] Figure 24 is a diagram illustrating appearance of a structure in a three-dimensional space.
[Figure 25] Figure 25 is a diagram illustrating a piping layer in a structure.
[Figure 26] Figure 26 is a diagram illustrating appearance of a tower in a three-dimensional space.

### [DESCRIPTION OF EMBODIMENT]

An embodiment of the present disclosure will be described below with reference to the drawings. In the following description, the same components will be denoted by the same reference characters. The same components have the same name and the same function. Thus, the detailed description of the components will not be repeated.

### <Outline>

An outline of pipe routing in designing a plant, and a pipe routing system 1 according to the present disclosure will be described below. The pipe routing system 1 is a system for designing pipes that supply various types of fluids in facilities for producing a chemical product through various manufacturing steps involving chemical reactions, such as a liquefied natural gas (LNG) plant and a petrochemical plant.

Facilities placed in a plant include, in a case of an LNG plant, an acid gas removal facility that removes acid gases (H₂S, CO₂, organic sulfur, etc.) contained in a source gas to be subjected to a liquefaction process, a sulfur recovery facility that recovers elemental sulfur from the removed acid gases, a water removal facility that removes water contained in the source gas, a compression facility that compresses a refrigerant used for cooling or liquefying the source gas (refrigerant mixture, propane refrigerant, etc.), and the like. Here, the facilities in the plant refers to apparatuses and pieces of equipment that are laid for purposes of the plant.

Designing such a plant includes, for example, the following steps. First, arrangement of facilities in the plant, various pieces of equipment such as pumps and heat exchangers, and frame constructions (piping racks) for passing various pipes, and routes of principal pipes are determined, a layout of the plant is designed, and an arrangement plan called a plot plan is created. Next, based on function requirements of the plant as a whole, a process unit (a series of production steps) from receiving raw materials to be used in the plant to shipment of products is planned in detail, mass/heat balance calculation is performed for each process, and a process flow called a process flow diagram (PFD) is created. Further, based on the PFD, a simulation is repeated and process calculation is revised, pipes passing between pieces of equipment in the plant and a layout of the various pipes are determined (pipe routing), and Piping and Instrument Diagram (P&ID), which is a detailed instrumentation diagram is created. A pipe routing system 1 according to the present disclosure is a 3D-CAD system that designs, in each of these steps, a layout of pieces of equipment, pipes, and the like in the entire plant and each of the facilities in the plant, assisting creation of a process flow, pipe routing, P&ID, and the like.

The pipe routing system 1 will be described below. In the following description, for example, when a terminal device 10 accesses a server 20, the server 20 responds with information for the terminal device 10 to generate a screen. Based on the information received from the server 20, the terminal device 10 generates the screen.

### <1. General Configuration of Pipe Routing System 1>

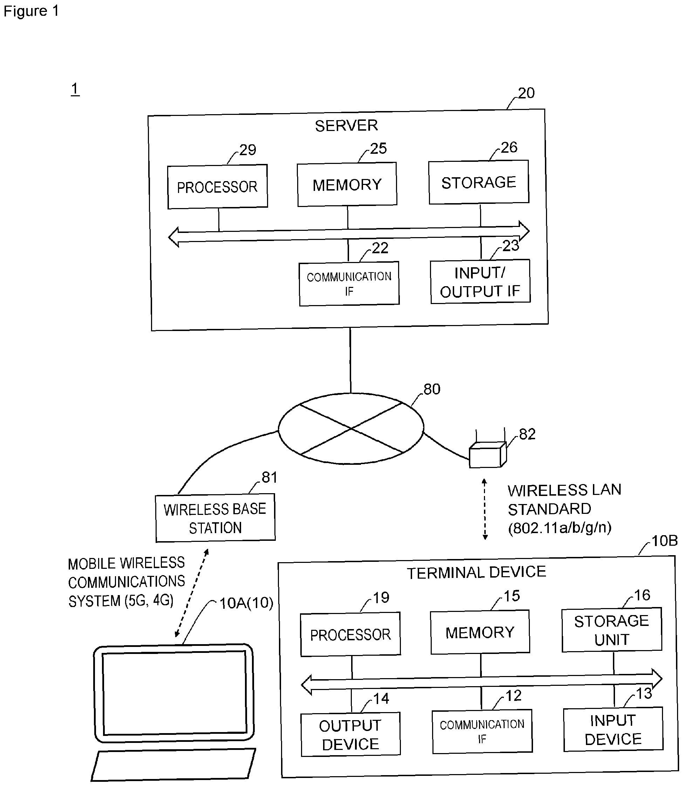

Figure 1 is a diagram illustrating a general configuration of the pipe routing system 1. As illustrated in Figure 1, the pipe routing system 1 includes a plurality of terminal devices (a terminal device 10A and a terminal device 10B, which will be collectively referred to as "terminal devices 10," are illustrated in Figure 1) and the server 20. The terminal devices 10 and the server 20 are connected together via a network 80, thus being capable of communicating with one another. The network 80 is configured as a wired or wireless network.

The terminal devices 10 are devices operated by users. Here, the users are persons who uses the terminal devices 10 to perform plant design, which is a function of the pipe routing system 1. The terminal devices 10 are provided as the desktop personal computers (PCs), laptop PCs, and the like. In addition, the terminal devices 10 may be provided as portable terminals supporting mobile communications system such as tablet computers and smartphones.

The terminal devices 10 are connected to the server 20 via the network 80, thus being capable of communicating with the server 20. The terminal devices 10 are connected to the network 80 by communicating with a wireless base station 81 that supports a communications standard such as 5G and Long Term Evolution (LTE) and with a communication device such as a wireless LAN router 82 that supports a wireless local area network (LAN) standard, for example, the Institute of Electrical and Electronics Engineers (IEEE) 802.11. As illustrated as the terminal device 10B in Figure 1, the terminal devices 10 each include a communication interface (IF) 12, an input device 13, an output device 14, a memory 15, a storage 16, and a processor 19.

The communication IF 12 is an interface through which the terminal device 10 inputs and outputs signals to communicate with external equipment.

The input device 13 is an input device for receiving input operations from a user (e.g., a keyboard, a pointing device such as a touch panel, a touchpad, and a mouse, etc.).

The output device 14 is an output device for presenting information to a user (a display, a speaker, etc.).

The memory 15 is for temporarily storing, for example, a program and data to be processed by the program or the like. For example, the memory 15 is a volatile memory such as a dynamic random access memory (DRAM).

The storage 16 is a storage device for saving data. For example, the storage 16 is a flash memory or a hard disc drive (HDD).

The processor 19 is a piece of hardware for executing a set of instructions written in the program. The processor 19 is constituted by an arithmetic unit, registers, peripheral circuits, and the like.

The server 20 is an apparatus that manages information on the user, information on various pieces of equipment, and various pipes and information on a virtual space that has been designed (a virtual space that is being designed is also included).

The server 20 receives, from a user, inputs of types of pieces of equipment to be arranged in the virtual space for the plant design, arrangement positions of the pieces of equipment, instructions to perform routing of pipes, and the like.

Specifically, for example, a point of view (virtual camera) is set in the virtual space for the plant design, and the various pieces of equipment arranged by the instructions from the user and the routed pipes are rendered based on settings of the virtual camera and displayed on the terminal device 10.

The server 20 arranges the various pieces of equipment in the virtual space based on the input types and arrangement positions of the various pieces of equipment, determines pipes and routes of the pipes based on instructions from the user performing piping and routing of pipes, performs the routing in the virtual space, and displays the pipes and the routes of the pipes on the terminal of the user.

The server 20 is a computer connected to the network 80. The server 20 includes a communication IF 22, an input/output IF 23, a memory 25, a storage 26, and a processor 29.

The communication IF 22 is an interface through which the server 20 inputs and outputs signals to communicate with external equipment.

The input/output IF 23 functions as an interface with an input device for receiving input operations from the users and with an output device for presenting information to the users.

The memory 25 is for temporarily storing, for example, a program and data to be processed by the program or the like. For example, the memory 25 is a volatile memory such as a dynamic random access memory (DRAM).

The storage 26 is a storage device for saving data. For example, the storage 26 is a flash memory or a hard disc drive (HDD).

The processor 29 is a piece of hardware for executing a set of instructions written in the program. The processor 29 is constituted by an arithmetic unit, registers, peripheral circuits, and the like.

### <1.1 Configuration of Terminal Device 10>

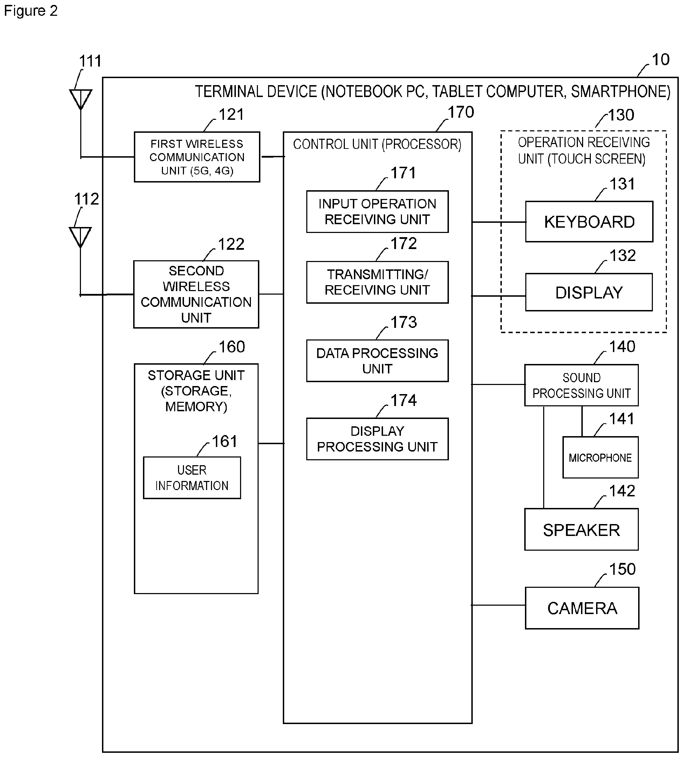

Figure 2 is a block diagram illustrating a functional configuration of the terminal device 10 included in the pipe routing system 1. As illustrated in Figure 2, the terminal device 10 includes a plurality of antennas (an antenna 111 and an antenna 112), wireless communication units (a first wireless communication unit 121 and a second wireless communication unit 122) that correspond to the antennas, an operation receiving unit 130 (including a keyboard 131 and a display 132), a sound processing unit 140, a microphone 141, a speaker 142, a camera 150, a storage unit 160, and a control unit 170.

The terminal device 10 also includes functions and configurations that are not particularly illustrated in Figure 2 (e.g., a battery for retaining electric power, an electric power supply circuit that controls supply of electric power from the battery to circuits, etc.). As illustrated in Figure 2, the blocks included in the terminal device 10 are electrically connected together with buses and the like.

The antenna 111 radiates signals emitted by the terminal device 10 in the form of radio waves. The antenna 111 also receives radio waves from space and provides the received signals to the first wireless communication unit 121.

The antenna 112 radiates signals emitted by the terminal device 10 in the form of radio waves. The antenna 112 also receives radio waves from space and provides the received signals to the second wireless communication unit 122.

The first wireless communication unit 121 performs a modulation and demodulation process and the like for transmitting and receiving signals via the antenna 111 to enable the terminal device 10 to communicate with other wireless devices. The second wireless communication unit 122 performs a modulation and demodulation process and the like for transmitting and receiving signals via the antenna 112 to enable the terminal device 10 to communicate with other wireless devices. The first wireless communication unit 121 and the second wireless communication unit 122 are communication modules each including a tuner, a received signal strength indicator (RSSI) calculation circuit, a cyclic redundancy check (CRC) calculation circuit, a high-frequency circuit, and the like. The first wireless communication unit 121 and the second wireless communication unit 122 perform modulation and demodulation, and frequency conversion on wireless signals transmitted and received by the terminal device 10 and provide the received signals to the control unit 170.

The operation receiving unit 130 has a mechanism for receiving input operations from a user. Specifically, the operation receiving unit 130 includes the keyboard 131 and the display 132. Note that the operation receiving unit 130 may be configured as, for example, a touch screen including a capacitive touch panel and detects a contact position of a user to the touch panel.

The keyboard 131 receives input operations from a user of the terminal device 10. The keyboard 131 is a device for character input. The keyboard 131 outputs information on input characters to the control unit 170 in the form of input signals.

The display 132 displays data such as images, videos, and texts under control by the control unit 170. The display 132 is provided in the form of, for example, a liquid crystal display (LCD) or an organic electroluminescence (EL) display.

The sound processing unit 140 performs modulation and demodulation on sound signals. The sound processing unit 140 modulates signals provided from the microphone 141 and provides the modulated signals to the control unit 170. The sound processing unit 140 also provides the sound signals to the speaker 142.

The sound processing unit 140 is provided in the form of, for example, a processor for sound processing. The microphone 141 receives sound inputs and provides sound signals equivalent to the sound inputs to the sound processing unit 140. The speaker 142 converts sound signals provided from the sound processing unit 140 into sounds and outputs the sounds to the outside of the terminal device 10.

The camera 150 is a device for receiving light with its light receiving elements and outputs the light in the form of captured images. For example, the camera 150 is a depth camera capable of detecting a distance from the camera 150 to an imaging object.

The storage unit 160 is configured with, for example, a flash memory and stores data and programs to be used by the terminal device 10. In some situations, the storage unit 160 stores user information 161.

The user information 161 is information on users who are to use the terminal device 10 to perform plant design, which is a function of the pipe routing system 1. The user information includes information for identifying users (user IDs), names of the users, organization information on companies to which the users belong, and the like.

The control unit 170 reads a program stored in the storage unit 160 and executes instructions included in the program, controlling operation of the terminal device 10. The control unit 170 is, for example, an application program that is installed in advance in the terminal device 10. Operating according to the program, the control unit 170 exercises functions as an input operation receiving unit 171, a transmitting/receiving unit 172, a data processing unit 173, and a notification control unit 174.

The input operation receiving unit 171 performs a process of receiving input operations from a user to an input device such as the keyboard 131.

The transmitting/receiving unit 172 performs a process for enabling the terminal device 10 to transmit and receive data to and from the external device such as the server 20 according to a communications protocol.

The data processing unit 173 performs a process of computing data of which an input has been received by the terminal device 10 and outputs a result of the computation to the memory or the like according to the program.

The notification control unit 174 performs a process of presenting information to a user. The notification control unit 174 performs a process of causing the display 132 to display an image to be displayed, a process of outputting sounds to the speaker 142, a process of generating vibrations in the camera 150, and the like.

### <1.2 Functional Configuration of Server 20>

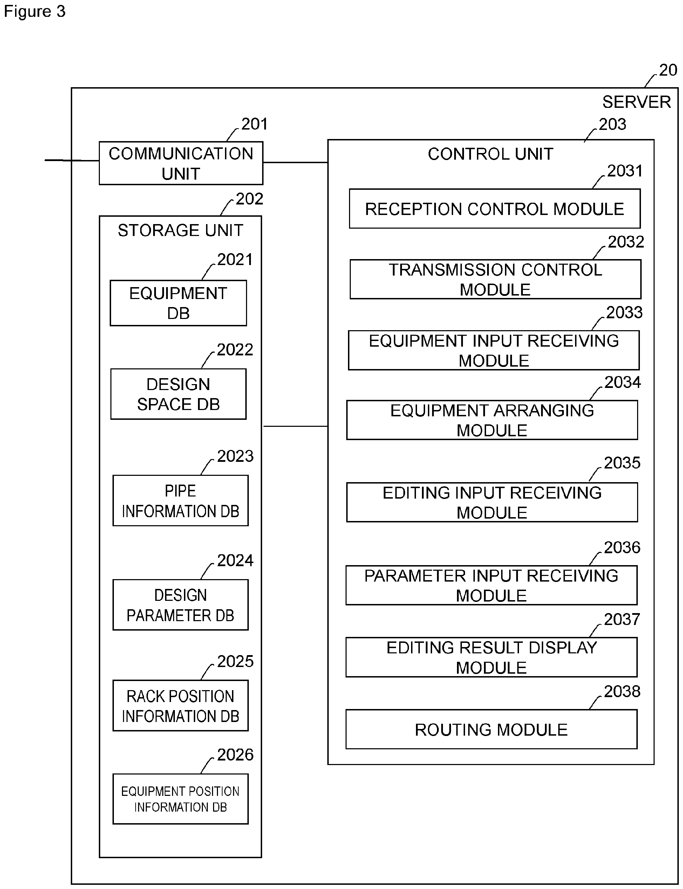

Figure 3 is a diagram illustrating a functional configuration of the server 20 included in the pipe routing system 1. As illustrated in Figure 3, the server 20 exercises functions as a communication unit 201, a storage unit 202, and a control unit 203.

The communication unit 201 performs a process for enabling the server 20 to communicate with the external device.

The storage unit 202 stores data and programs to be used by the server 20. The storage unit 202 stores an equipment database 2021, a design space database 2022, a pipe information database 2023, a design parameter database 2024, a rack position information database 2025, and an equipment position information database 2026.

The equipment database 2021 is a database for retaining information concerning various pieces of equipment to be arranged in the virtual space that is presented for the plant design in the pipe routing system 1. This will be described later in detail.

The design space database 2022 is a database for retaining information on the virtual space in which a user performs the design. This will be described later in detail.

The pipe information database 2023 is a database for storing information in which types of pipes are categorized by property of fluid to flow inside a pipe. This will be described later in detail.

The design parameter database 2024 is a database for retaining information on parameters for pipe routing in the pipe routing system 1 (pipe design parameters). This will be described later in detail.

The rack position information database 2025 is a database for retaining information that indicates a rack region specified by a user from among racks arranged in a three-dimensional space when a pipe is routed. This will be described later in detail.

The equipment position information database 2026 is a database for retaining information concerning positions of various pieces of equipment arranged in the three-dimensional space, and the positions includes a start point and an end point of each piece of equipment. This will be described later in detail.

The control unit 203 exercises functions as various modules that include a reception control module 2031, a transmission control module 2032, an equipment input receiving module 2033, an equipment arranging module 2034, an editing input receiving module 2035, a parameter input receiving module 2036, an editing result display module 2037, and a routing module 2038 when the processor 29 of the server 20 performs processing according to programs.

The reception control module 2031 controls a process in which the server 20 receives signals from the external device according to the communications protocol.

The transmission control module 2032 controls a process in which the server 20 transmits signals to the external device according to the communications protocol.

The equipment input receiving module 2033 controls a process of receiving, from a user, operations of inputting types of the various pieces of equipment to be arranged in the virtual space for performing the plant design with the pipe routing system 1, and inputting positions of the various pieces of equipment to be arranged in the virtual space.

When a user uses the terminal device 10 to perform the plant design, the virtual space that simulates an actual site on which the plant design is performed is displayed on the display 132 of the terminal device 10. The user then performs prescribed operations on a screen of the display 132 to input the types of the various pieces of equipment to be arranged in the virtual space and the arrangement positions of the pieces of equipment in the virtual space, and the equipment input receiving module 2033 receives information on the input types of the various pieces of equipment and the input arrangement positions of the pieces of equipment in the virtual space.

The prescribed operations that are performed on the screen of the display 132 and received by the equipment input receiving module 2033 are, for example, operations of clicking a desired type from a plurality of patterns of lists of various pieces of equipment displayed on the screen to select the desired type and clicking a desired location in the virtual space displayed on the screen to select an arrangement position. As another example, the prescribed operations are operations of selecting a desired image from a list of images that illustrate appearances of the various pieces of equipment displayed on the screen, and dragging and moving the desired image to a desired location in the virtual space displayed on the screen to select an arrangement position. Note that such input operations do not limit the inputs of the various pieces of equipment.

The equipment arranging module 2034 controls a process of arranging and displaying, based on information on the types of the various pieces of equipment and the arrangement positions of the various pieces of equipment in the virtual space that has been received by the equipment input receiving module 2033, the various pieces of equipment in the virtual space. The information on the types of the various pieces of equipment to be arranged in the virtual space and the arrangement positions of the pieces of equipment in the virtual space is received by the prescribed operations on the terminal device 10 by the user. Thus, based on the information, the equipment arranging module 2034 arranges the various pieces of equipment at the input arrangement positions in the virtual space displayed on the display 132 of the terminal device 10, thereby displaying the pieces of equipment on the display 132 of the terminal device 10.

Here, objects indicating pieces of equipment arranged in the virtual space each include a nozzle to which pipes are to be connected, as a start point and an end point. Every object includes information on its start point and end point.

The editing input receiving module 2035 controls a process of receiving an input operation of editing at least one of the various pieces of equipment from a user. When the user inputs editing information for making various adjustments to at least one of various pieces of equipment displayed on the display 132 of the terminal device 10, the editing input receiving module 2035 receives the input editing information on the at least one of various pieces of equipment. The editing of the various pieces of equipment is, for example, editing of a piece of equipment in any one or more of its type, shape, size, and number.

An example of the input operation of editing at least one of the various pieces of equipment by the user in the editing input receiving module 2035 is an input operation of editing parameters that are set to at least one of the various pieces of equipment. Another example of the input operation by the user is an input operation of editing a size, a length, or the like of one of the various pieces of equipment displayed on the display 132 by dragging the one of the various pieces of equipment, and numeric values equivalent to the size or the length are received as the parameters.

The parameter input receiving module 2036 controls a process of receiving an input of various parameters for routing a pipe. The various parameters include information on types of the pipe, types of pieces of equipment to be connected, and the number, sizes, and arrangement of piping trays. The various parameters will be described later in detail. When performing the pipe routing, a user operates the terminal device 10 to input the various parameters.

The editing result display module 2037 controls a process of changing a display form of the at least one of the various pieces of equipment and displaying the at least one of the various pieces of equipment in the virtual space based on the editing information on the at least one of the various pieces of equipment received by the editing input receiving module 2035. The information on the editing of the at least one of the various pieces of equipment arranged in the virtual space, for example, information of editing a length of a pipe or a connection angle of the pipe with a piece of equipment, is received by the prescribed operations on the terminal device 10 by a user. Thus, based on the information, the editing result display module 2037 changes the display form of the at least one of the various pieces of equipment in the virtual space displayed on the display 132 of the terminal device 10. For example, the editing result display module 2037 changes an appearance of the at least one of the various pieces of equipment according to a length of an attached pipe or a connection angle of the pipe with the at least one of the various pieces of equipment that has been received. The editing result display module 2037 then displays the at least one of the various pieces of equipment on the display 132 of the terminal device 10.

The routing module 2038 controls a process of receiving, from a user, instruction operations of routing a pipe to be arranged in a plant that is to be designed with the pipe routing system 1 in association with the various pieces of equipment arranged in the virtual space and performing the routing. Examples of the pipes to be arranged in the plant include a pipe for transporting source gas, a pipe for transporting absorbent solution for absorbing a component to be removed from the source gas, a pipe for transporting discharge gas, and the like, in the plant. The pipes are arranged to cause fluid such as liquid and gas to flow.

For example, on a screen displayed on the display 132 of the terminal device 10, a user specifies a prescribed location of each of various pieces of equipment arranged in the virtual space, for example, an endpoint of a attached pipe of a piece of equipment, as a start position or an end position for routing, and performs an operation of issuing instructions for routing (e.g., presses a prescribed button on the screen). The routing module 2038 receives instructions on the routing from the user and performs the routing of the pipes.

Note that the routing module 2038 may perform routing of pipes based on detailed information that is input in the virtual space by a user (what is called manual routing) or may perform automatic routing based on starting and end points specified by a user. At this time, the automatic routing is performed according to an algorithm that determines routing directions of pipes under prescribed conditions and makes pipes keep away from existing various pieces of equipment and existing pipes. Further, the routing module 2038 may be configured to route a pipe having a pipe diameter, a material, and the like that are specified with parameters input by a user or preset parameters or may be configured to suggest a pipe having a pipe diameter and a material that are optimal for a fluid to flow through the pipe.

As described above, the present embodiment has a configuration such that the server 20 receives inputs of types and arrangement positions of various pieces of equipment and instructs the terminal device 10 to display the various pieces of equipment, receives inputs of editing at least one of the various pieces of equipment and instructs the terminal device 10 to display the results of the editing, and receives instructions on pipe routing, performs the routing, and causes the terminal device 10 to display the result of the routing. However, such a configuration is not limitative.

For example, the terminal device 10 may be configured to receive inputs relating to some or all of the functions described above, process the inputs, and display the result of the process on the display 132 of the terminal device 10. To provide such a configuration, the terminal device 10 may have a configuration such that a user accesses the server 20 via the terminal device 10 to install a program provided by the server 20 in the terminal device 10, and the terminal device 10 performs the process. In this case, the server 20 need not include, as its functions, some or all of the equipment input receiving module 2033, the equipment arranging module 2034, the editing input receiving module 2035, the parameter input receiving module 2036, the editing result display module 2037, and the routing module 2038.

### <3. Data Structure>

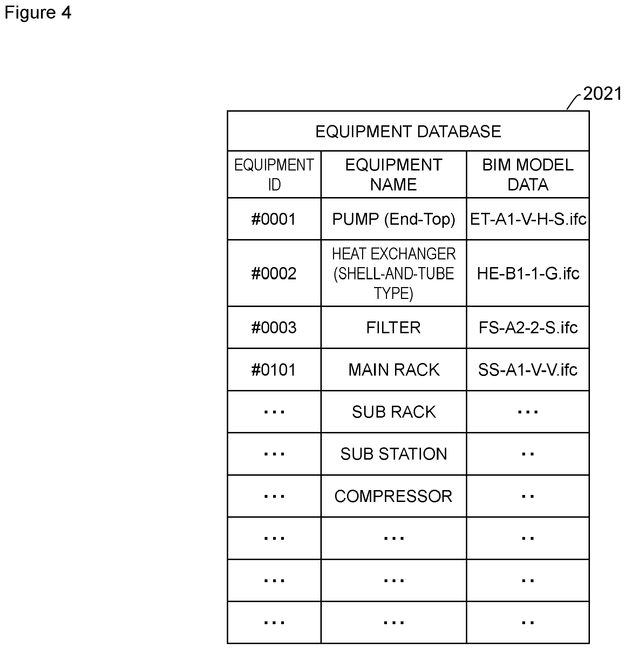

Figure 4 is a diagram illustrating the equipment database 2021 stored in the server 20.

As illustrated in Figure 4, every record of the equipment database 2021 includes an item "Equipment ID", an item "Equipment name", an item "BIM model data", and the like.

The item "Equipment ID" is information for identifying types of various pieces of equipment that can be arranged in the virtual space in the pipe routing system 1.

The item "name" is a name that indicates a type of an individual piece of the various pieces of equipment. For example, information on a name that indicates a type such as a pump, a heat exchanger, a filter, a valve, and a rack is stored. Further, in the case of a pump or a heat exchanger, information indicating a model of a pump such as an end-top type or indicating a type of a heat exchanger such as a shell-and-tube type. Note that the name indicating a piece of equipment may be a code specified based on a prescribed standard or the like or may be a model number or the like specified by a manufacturer.

The item "BIM model data" is information indicating a data name (file name) of a piece of model data arranged in the virtual space in the pipe routing system 1 and is a piece of model data to be used in a 3D-CAD system. The 3D-CAD system provided by the server 20 builds a three-dimensional virtual space and performs modeling that draws shape of pieces of equipment in the three-dimensional virtual space. The 3D-CAD system further sets a point of view (virtual camera) in the virtual space and renders these pieces of equipment based on settings of the virtual camera. Every piece of model data stored in the item "BIM model data" is a piece of model data used for rendering an actual piece of equipment from a point of view of a given virtual camera.

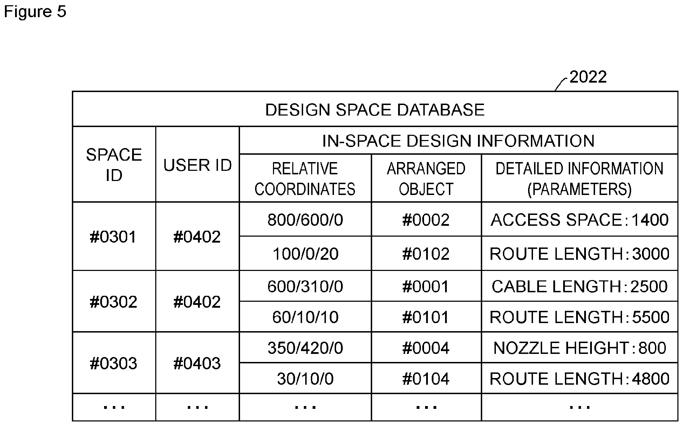

Figure 5 is a diagram illustrating an example of a data structure of the design space database 2022.

As illustrated in Figure 5, every record of the design space database 2022 includes an item "Space ID", an item "User ID", an item "In-space piping information", and the like.

The item "Space ID" is information for identifying each piece of information on a virtual space designed with the pipe routing system 1 by a user.

The item "User ID" is information for identifying each user who uses the pipe routing system 1. Note that the item "user ID" may store information for identifying a plurality of users, as shown in an example in which the item "Space ID" is "#0302." This is for enabling a plurality of users to design and share one virtual space. Information on the item "In-space design information," which will be described later, may be stored in association with each user.

The item "In-space piping information" is information concerning a block pattern, an individual piece of equipment, a routed pipe arranged in the virtual space by a user with the pipe routing system 1. Specifically, the item "In-space piping information" includes an item "Relative coordinates," an item "Arranged object," and an item "Detailed information (parameters)," and the like.

The item "Relative coordinates" is information indicating a relative position in the virtual space of a piece of equipment or a pipe arranged in the virtual space. For example, the item "Relative coordinates" stores coordinate data on three-dimensional coordinates in the virtual space. The relative coordinates are, for example, relative coordinates of a reference position of a piece of equipment (e.g., a position of a center of the piece or an endpoint of the piece in any one of six directions) in the case where the virtual space is expressed as an XYZ coordinates. However, expression of the relative coordinates is not limited to this manner.

The item "Arranged object" is information indicating a piece of equipment or a pipe arranged in the virtual space and corresponds to the item "Equipment ID" in the equipment database 2021.

The item "Detailed information (parameters)" is editing information on editing of a piece of equipment or a pipe arranged on the virtual space or information on a routed pipe. For example, the item "Detailed information" stores an editing parameter of a piece of equipment. The editing parameter of a piece of equipment is information concerning a number or a size.

The equipment input receiving module 2033 of the server 20 adds a record to or updates a record in the design space database 2022 when receiving arrangement information on a piece of equipment from each user. When receiving editing parameter information on a piece of equipment from each user, the editing input receiving module 2035 adds a record to or updates a record in the design space database 2022. When a process of the pipe routing is performed, the routing module 2038 adds records to or updates records in the design space database 2022.

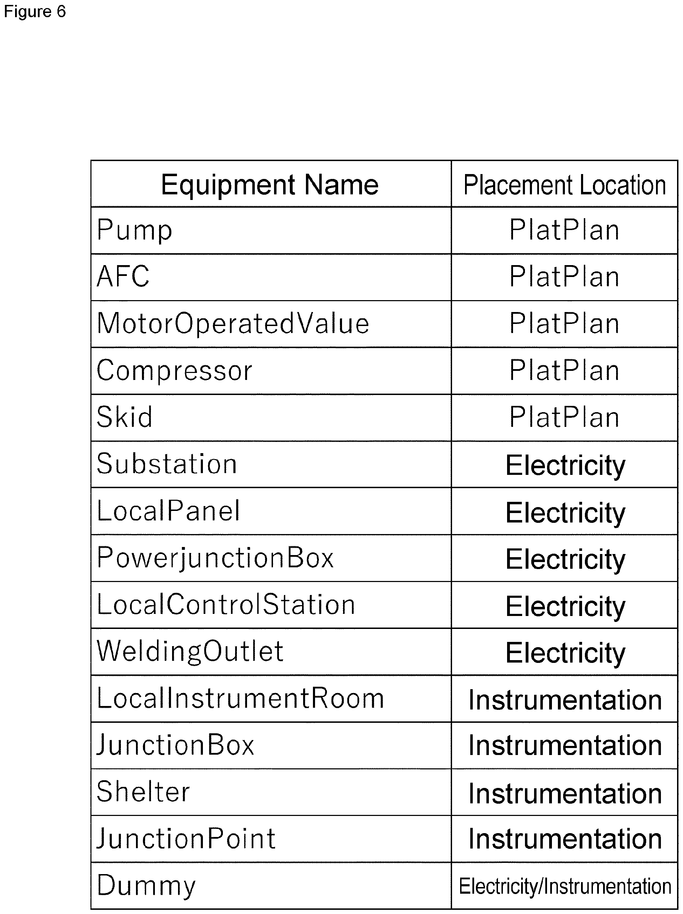

Figure 6 is a diagram illustrating types of pieces of equipment treated in the pipe routing system 1.

As illustrated in Figure 6, the pipe routing system 1 uses various pieces of equipment such as a pump, a compressor, a tower, and a junction box. These pieces of equipment are arranged in placement sections that are determined based on types of the pieces of equipment.

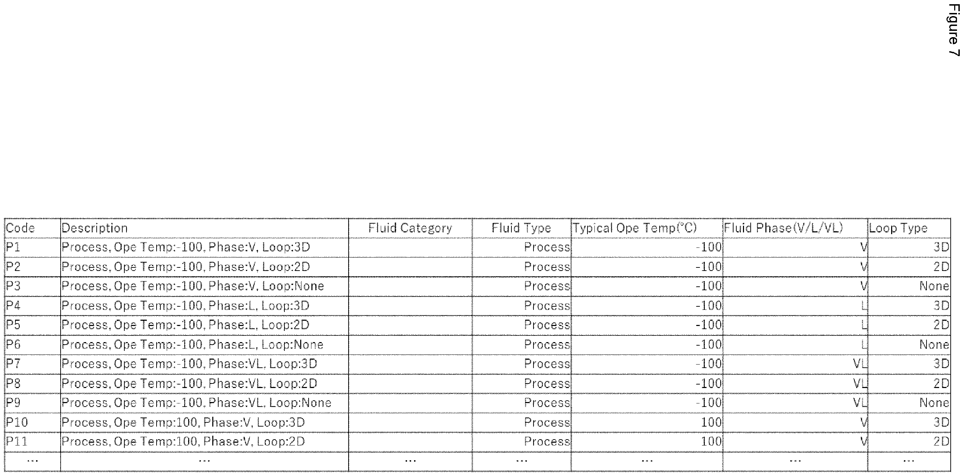

Figure 7 is a diagram illustrating an example of a data structure of the pipe information database 2023. As illustrated in Figure 7, the pipe information database 2023 includes an item "Code," an item "Description," an item "Fluid Categoly," an item "Fluid Type," an item "Typical Ope Temp (°C)," an item "Fluid Phase (V/L/VL)," an item "Loop Type," and the like.

The item "Code" is information indicating a fluid code given for a property of a fluid to flow inside a pipe.

The item "Description" is information that describes a fluid that is set corresponding to a fluid code. In more detail, the item "Description" indicates a content of the following items.

The item "Fluid Categoly" is information indicating a category of a fluid. The item is used when an arrangement of pipes is determined. This item may be left blank.

The item "Fluid Type" is information indicating a type of a fluid. The item is used when the number of layers for pipes is determined. Types of fluids include "Process," "Utility," and "Flare."

Process refers to a pipe or a pipe system that conveys a raw material or a product from one device or apparatus to another device or apparatus to separate and refine the raw material to extract the product, a byproduct, and wastes.

Utility refers to a pipe or a pipe system that conveys water, air, vapor, fuel, nitrogen, or the like necessary to operate or maintain pieces of equipment in a plant.

If a pressure in a piece of equipment or a pipe that treats combustible fluid exceeds its design pressure, the fluid inside the piece of equipment or the pipe is discharged from a safety valve or a control valve and burned in a flare stack. Flare refers to a pipe or a pipe system that conveys the combustible fluid discharged from the safety valve or the control valve.

The item "Typical Ope Temp (°C)" is information indicating a normal temperature of a fluid flow and is used for determining a thickness of an insulating material. This item may be left blank.

The item "Fluid Phase (V/L/VL)" is information indicating a state of a fluid and is information indicating whether a direction at a branch point is to be upward or downward.

The item "Loop Type" is information indicating a structure of a loop portion of a pipe and is used to determine necessity of a loop portion and determine a shape of the loop portion.

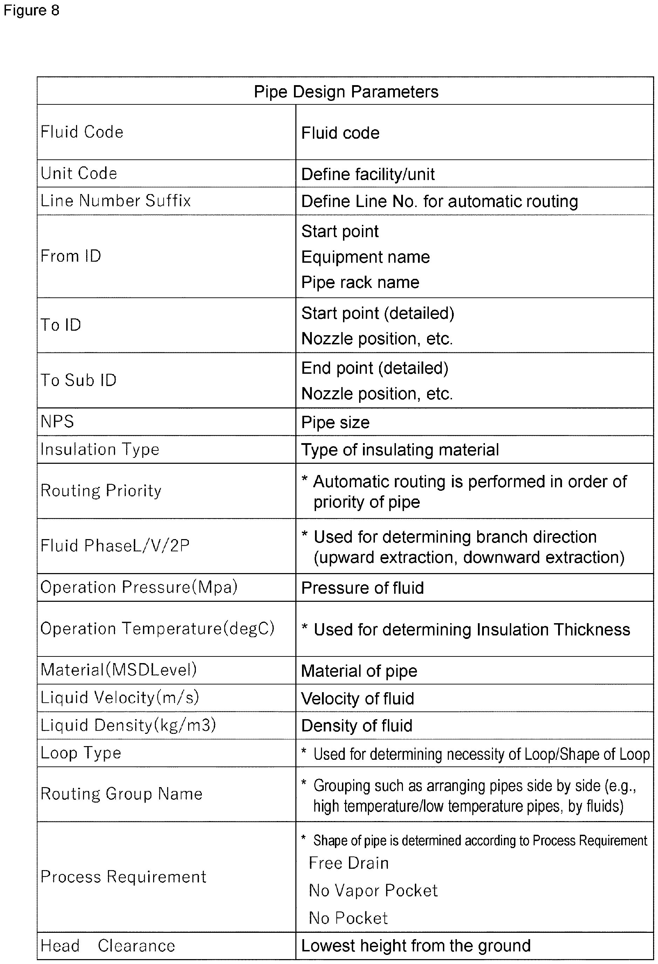

Figure 8 illustrates information indicating a content of the design parameter database 2024.

Pipe design parameters include an item "Fluid Code," an item "Unit Code," an item "Line Number Suffix," an item "From ID," an item "To ID,", an item "To Sub ID," an item "NPS," an item "Insulation Type," an item "Routing Priority," an item "Fluid Phase L/V/2P," an item "Operation Pressure (Mpa)," an item "Operation Temperature (degC)," an item "Material (MSDLevel)," an item "Liquid Velocity (m/s)," an item "Liquid Density (kg/m3)," an item "Loop Type," an item "Routing Group Name," an item "Process Requirement," and an item "Bottum of Pipe."

The item "Fluid Code" is information indicating a fluid code that indicates a fluid to flow through a pipe.

The item "Unit Code" is information indicating a code of a facility or a unit to which a pipe is to be connected.

The item "Line Number Suffix" is information indicating a line number of a pipe to be routed.

The item "From ID" is information indicating a start point ID that indicates a position of a start point of a pipe to be routed. Here, an object that is selected as a start point is a first object in the present invention.

The item "To ID" is information indicating an end point ID that indicates a position of an end point of a pipe to be routed. Here, an object that is selected as an end point is a second object in the present invention.

The item "To Sub ID" is information indicating a detail of a pipe to be routed, for example, a position of a nozzle.

The item "NPS" is information indicating a size of a pipe.

The item "Insulation Type" is information indicating a type of an insulating material of a pipe to be routed.

The item "Routing Priority" is information indicating a priority in routing. The item is used when routing of pipes is performed.

The item "Fluid Phase L/V/2P" is information indicating a state of a fluid to flow through a pipe and is information used to determine a structure of a branch portion of a pipe.

The item "Operation Pressure (Mpa)" is information indicating a pressure of a fluid inside a pipe.

The item "Operation Temperature (degC)" is information indicating a temperature of a fluid inside a pipe.

The item "Material (MSDLevel)" is information indicating a material of a pipe.

The item "Liquid Velocity (m/s)" is information indicating a velocity of a fluid to flow through a pipe.

The item "Liquid Density (kg/m3)" is information indicating a density of a fluid to flow through a pipe.

The item "Loop Type" is information indicating necessity of a loop portion in a pipe and indicating a structure of the loop portion. Here, the loop portion refers to a portion at which a pipe is bent in such a manner as to make a partial detour, deviating an original route, to absorb thermal stress caused by a fluid at high temperature when the fluid flows the pipe. To the item "Loop Type," two-dimensional (2D) or three-dimensional (3D) information is input.

The item "Routing Group Name" is information used when grouping such as arranging a plurality of pipes side by side is performed. For example, the item is applied to arranging pipes for cooling water, and the like.

The item "Process Requirement" is information concerning a process requirement. The process requirement is information referring to a certain condition under which a structure of a path of a pipe is specified. The process requirement will be described later in detail.

The item "Routing Group Name" is information used when grouping such as arranging a plurality of pipes side by side is performed. For example, the item is applied to arranging pipes for cooling water, and the like.

The item "Head Clearance" is information for specifying a height of the lowest portion of a pipe from the ground. To the item "Head Clearance," a dimension value is input.

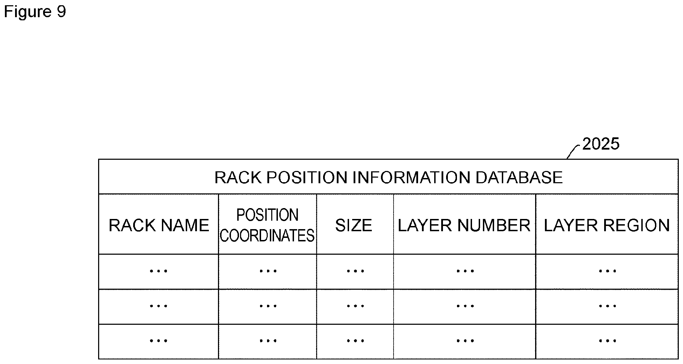

Figure 9 illustrates information indicating a content of the rack position information database 2025. As illustrated in Figure 8, the rack position information database 2025 includes an item "Rack name," an item "Position coordinates," an item "Size," an item "Layer number," and an item "Layer region."

The item "Rack name" is information indicating a name of a rack that is specified by a user when a pipe is routed.

The item "Position coordinates" is information indicating a position of an origin of a rack corresponding to a rack name in a three-dimensional space. The position in the three-dimensional space is expressed as coordinate values with respect to a base point of the three-dimensional space.

The item "Size" is information indicating a size of a rack corresponding to a rack name from its origin. As the size, dimensions in three directions orthogonal to one another are defined.

The item "Layer number" is information indicating a number of a layer (tier) of rack that is specified by a user when a pipe is routed. A rack has a stacked structure in which a space for laying pipes is divided in a vertical direction into layers spaced from one another. These layers are each given a layer number starting from one in an order from a lowermost tier to a topmost tier.

The item "Layer region" is information indicating a region specified in each layer by a user. A layer region is specified based on dimensions specified by the user. For example, the user specifies a layer region in a format of a range of 1500 mm from the left end of a layer. Information specified in such a format is stored in the item "Layer region."

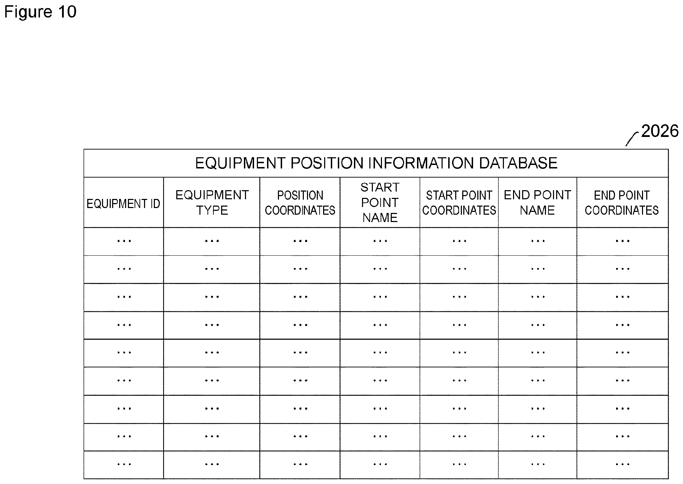

Figure 10 is a diagram illustrating an example of a data structure of the equipment position information database 2026. As illustrated in Figure 10, the equipment position information DB includes an item "Equipment ID," an item "Equipment type," an item "Position coordinates," an item "Start point name," an item "Start point coordinates," an item "End point name," and an item "End point coordinates."

The item "Equipment ID" is information for identifying pieces of equipment arranged in the three-dimensional space.

The item "Equipment type" is information indicating a type of a piece of equipment corresponding to an equipment ID.

The item "Position coordinates" is information indicating position coordinates of a piece of equipment corresponding to an equipment ID in the three-dimensional space.

The item "Start point name" is information indicating a name of a start point of a piece of equipment corresponding to an equipment ID.

The item "Start point coordinates" is information indicating position coordinates of a start point of a piece of equipment corresponding to an equipment ID in the three-dimensional space.

The item "End point name" is information indicating a name of an end point of a piece of equipment corresponding to an equipment ID.

The item "End point coordinates" is information indicating position coordinates of an end point of a piece of equipment corresponding to an equipment ID in the three-dimensional space.

### <4. Operation>

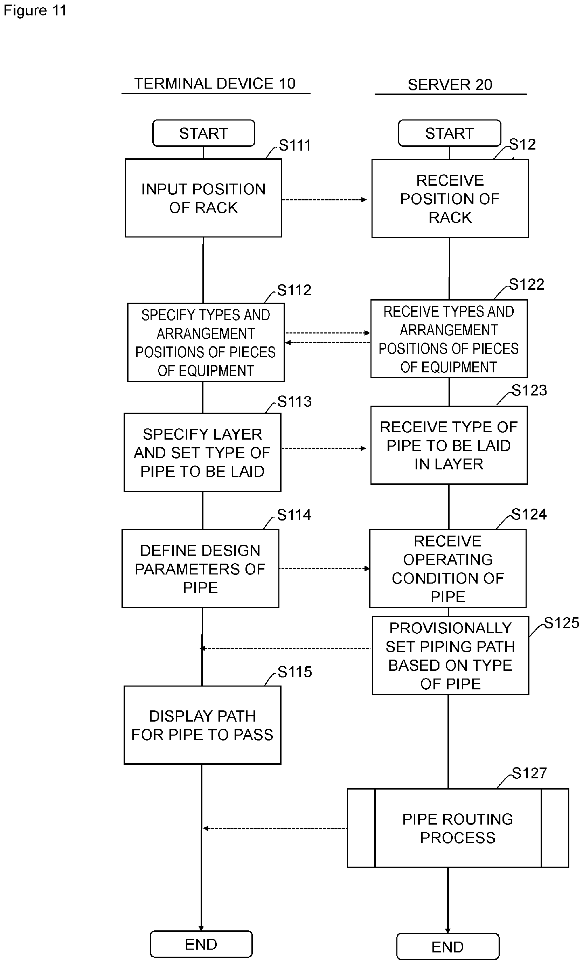

With reference to Figure 11 to Figure 19, a pipe routing process by the pipe routing system 1 according to the present embodiment will be described below.

Figure 11 is a flowchart illustrating the entire pipe routing process by the pipe routing system 1. For example, the process is started when a user accesses to the server 20 via a Web browser on the terminal device 10 and issues instructions for receiving a plant design service provided by the server 20. At this time, a prescribed authentication may be performed on the user.

In the pipe routing system 1, the user operates the terminal device 10 to input positions of racks (step 5111). Specifically, in a virtual space displayed as its initial state, the user handles an object indicating the racks to arrange the racks at positions desired by the user. Sizes and types of racks can be selected or specified by a user.

In step Sill, a longitudinal direction is specified to each rack. The longitudinal direction refers to a direction in which the rack extends in plan view from above. The longitudinal direction of the rack may be specified by the user separately or may be specified based on a shape of the rack edited by the user.

In step S121, to receive inputs of the positions and the sizes of the racks arranged in the virtual space for performing the plant design, the control unit 203 of the server 20 transmits instructions to display the virtual space to the terminal device 10 via the communication unit 201.

In step S121, the equipment input receiving module 2033 of the server 20 receives, via the communication unit 201, information on types of various pieces of equipment and arrangement positions of the various pieces of equipment in the virtual space, and user information that are transmitted from the terminal device 10.

After step S112, the server 20 receives information on the input types and sizes of the racks, and the specified positions of the racks in the virtual space and arranges the racks in the virtual space (step S121).

Next, the user specifies types and arrangement positions of pieces of equipment to be connected with pipes (step S112).

The server 20 receives the types and arrangement positions of the pieces of equipment specified by the user (step S122).

In step S122, to receive inputs of the types of the various pieces of equipment to be arranged in the virtual space for performing the plant design and the arrangement positions of the various pieces of equipment in the virtual space, the control unit 203 of the server 20 transmits instructions to display the virtual space to the terminal device 10 via the communication unit 201.

In step S122, the input operation receiving unit 171 of the terminal device 10 receives, from the user, an input operation of the types of the various pieces of equipment and the arrangement positions of the various pieces of equipment in the virtual space. The transmitting/receiving unit 172 transmits information on the received types of the various pieces of equipment and the arrangement position of the various pieces of equipment in the virtual space, and the user information to the server 20.

In step S122, the equipment input receiving module 2033 of the server 20 receives, via the communication unit 201, information on types of various pieces of equipment and arrangement positions of the various pieces of equipment in the virtual space, and user information that are transmitted from the terminal device 10.

In step S122, based on the information on the types of the various pieces of equipment and the arrangement positions of the various pieces of equipment in the virtual space received in step S122, the equipment arranging module 2034 of the server 20 refers to the equipment database 2021 and transmits instruction information for arranging and displaying the various pieces of equipment in the virtual space to the terminal device 10 via the communication unit 201. The equipment arranging module 2034 further stores the information on the types of the various pieces of equipment and the arrangement positions of the various pieces of equipment in the virtual space that has been received, in the design space database 2022.

In step S122, the transmitting/receiving unit 172 receives the instruction information transmitted from the server 20 for arranging and displaying the various pieces of equipment in the virtual space. The notification control unit 174 arranges the various pieces of equipment in the virtual space and causes the display 132 to display the virtual space.

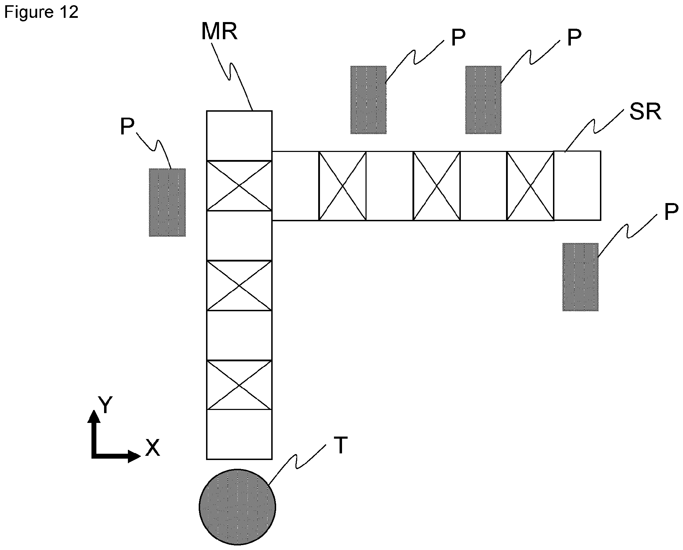

An example of the displaying on the terminal device 10 at this time is illustrated in Figure 12. Figure 12 is a diagram illustrating an example of an operation screen in a state where racks and various pieces of equipment are arranged in a three-dimensional virtual space. Note that, this figure illustrates the three-dimensional virtual space in the form of plan view from above.

As illustrated in Figure 12, the three-dimensional space has a three-dimensional Cartesian coordinates. In this figure, a main rack MR, a sub rack SR, a tower T, and a plurality of pumps are illustrated.

The main rack MR has a longitudinal direction that extends in a Y direction.

The sub rack SR has a longitudinal direction that extends in an X direction.

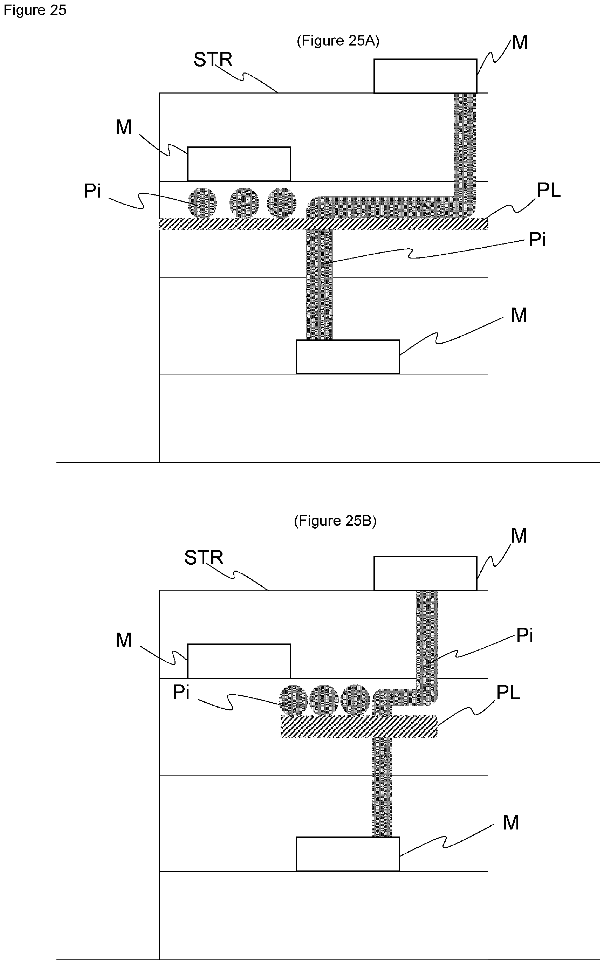

The tower T is arranged at an end portion of the main rack. The tower T is a column-shaped structure (see Figure 25).

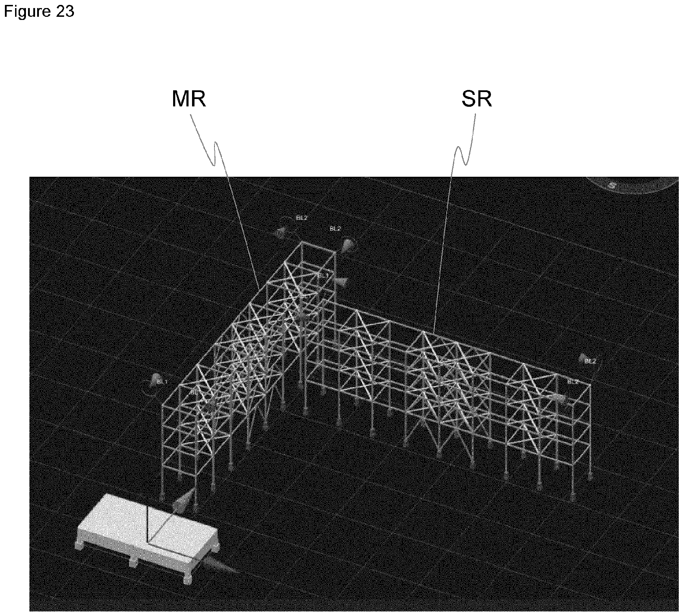

Here, with reference to Figure 23, structures of the main rack MR and the sub rack SR will be described in detail. Figure 23 is a diagram illustrating appearance of the main rack MR and the sub rack SR in the three-dimensional space.

As illustrated in Figure 23, layers of the main rack MR are at different heights from layers of the sub rack SR. The longitudinal direction of the main rack MR and the longitudinal direction of the sub rack SR are orthogonal to each other.

After step S112, the user operates the terminal device 10 to specify a position of a layer in which a pipe is to be laid to a rack and sets a type of a pipe to be laid in the specified layer (Step S113). Specifically, in the racks placed in the virtual space, the user specifies a position of a layer in which the pipe is to be laid. The user further specifies, in the layer, a region to be occupied by the pipe. The user further selects, for the specified layer, a type of fluid to flow the pipe to set a type of the pipe. The user may select a fluid code to select the type of the pipe.

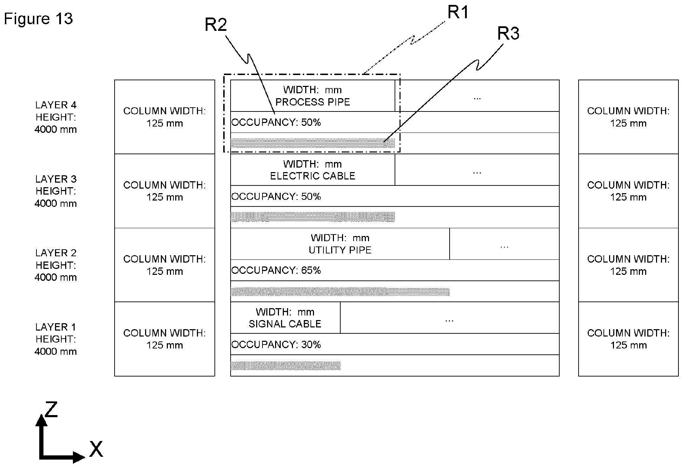

Here, an operation of specifying a layer where a pipe is to be laid and specifying a region in the layer will be described with an example of a screen. Figure 13 is a diagram illustrating an example of an operation screen when the layer and the region in which a pipe is to be laid is specified. In step S112, an editing screen that displays a type of a pipe to be arranged for each layer of a rack is displayed.

As illustrated in Figure 13, the operation screen (editing screen) displays pipes housed inside a rack in sectional view orthogonal to a longitudinal direction in which the rack extends and pipes. In this figure, a structure of layers that are stacked in the rack is schematically drawn. In a region indicated with a sign R1, laying a process pipe is specified. On the operation screen, a dimension from an end portion of the rack can be specified to specify a region in a layer.

In addition, the operation screen displays an occupancy of each of types of pipes to be arranged for each layer of the rack (sign R2). The occupancy refers to a ratio occupied by a length of a specified pipe in its width direction (diameter) with respect to a length of a layer in its width direction (X direction).

By checking the occupancy, a ratio by which a pipe of a type in question can be checked.

In addition, the operation screen displays bars (sign R3) that visually represent occupancies. When an occupancy is 50%, the corresponding bar extends by a space that is half a region of a layer. By checking a bar, how much empty space is left in a layer can be intuitively grasped.

As illustrated in Figure 11, after step S113, the server 20 receives information concerning the layer and the region that have been specified by the user and in which a pipe is to be laid (step S123). Specifically, the server 20 records information concerning the layer and the region in the specified rack as a new record of the rack position information DB.

The user next inputs pipe design parameters (step S114). Specifically, the user inputs items of the items included in the design parameter DB 2024 excluding the type of a fluid, which has already been input. Specifically, the items include a line number, the specification of a start point and an end point, a pipe size, a process requirement, a priority, an operation temperature, and the like.

After step S124, the server 20 receives the pipe design parameters input by the user. Specifically, the items input by the user are recorded as a new record of the design parameter DB 2024.

As illustrated in Figure 11, after step S114, the routing module 2038 provisionally sets a piping path according to the information concerning the positions of the pieces of equipment and the content of the definition items defined as the pipe to be routed (step S125). Here, the piping path is a certain region in a layer of a rack in which a pipe is to be laid. The piping path represents a concept that indicates a spatial path in which a pipe is to be laid. In step S125, distances in a direction orthogonal to the longitudinal direction between racks and a piece of equipment to be connected to the pipe are checked, and a rack closest to the piece of equipment is determined. Based on the provisional settings of the piping path, the provisional piping path is set such that the piping path passes through the closest rack determined.

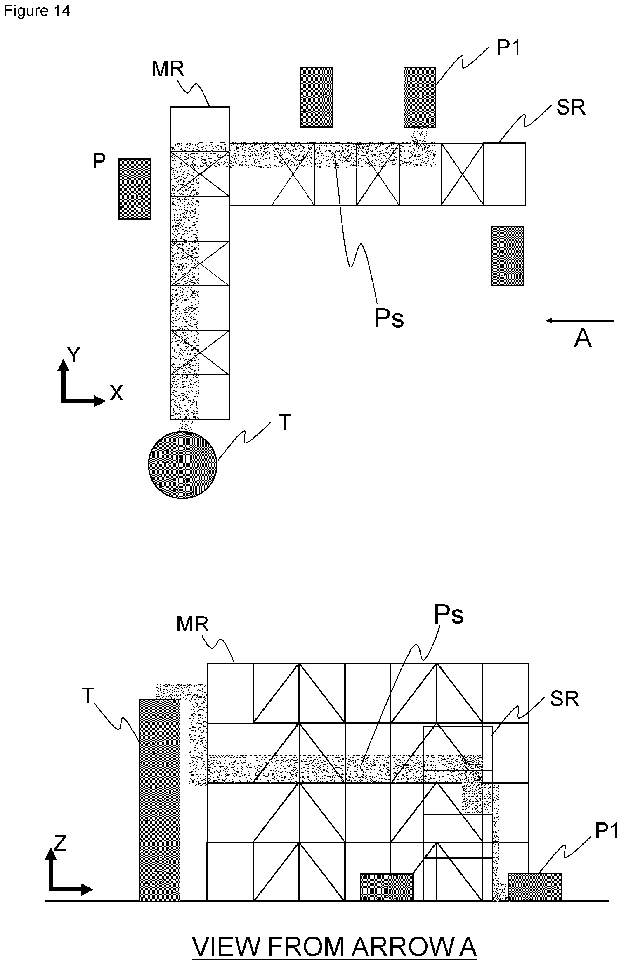

Thus, a spatial path in which a pipe is to be laid is provisionally set, and the piping path through which the pipe is to pass is displayed on the terminal device 10 (step S115). Details of the set piping path is displayed in the virtual space. The operation screen of the terminal device 10 at this time will be described with reference to Figure 14. Figure 14 is a diagram illustrating an example of the operation screen of the terminal device 10 when the piping path is set.

In Figure 14, a hatched portion is the piping path that indicates the spatial path in which a pipe is to be laid. The piping path starts from the tower T, passes through a third layer of the main rack MR from the top, and passes a third layer of the sub rack SR from the top, to be connected to a pump P1.

The routing module 2038 of the server 20 next performs the pipe routing (step S127). A process of the pipe routing will be described below in detail.

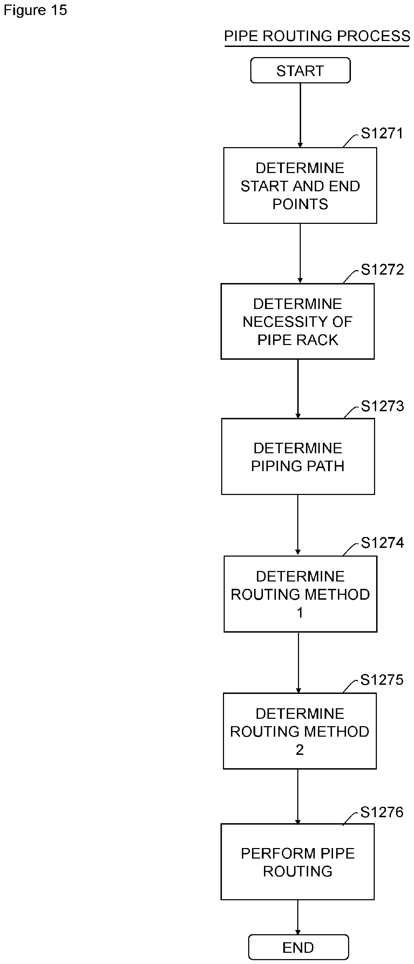

Next, with reference to Figure 15, the pipe routing process will be described in detail. Figure 15 is a diagram illustrating details of the pipe routing process.

As illustrated in Figure 15, in the pipe routing process, the routing module 2038 first determines start and end points (step S1271). Specifically, the routing module 2038 reads, from the pipe design parameters input into the design parameter DB 2024, information on a start point and an end point of the pipe to be routed. Here, the information on the start point and the end point may include information concerning a direction of a nozzle to which the pipe is to be connected.

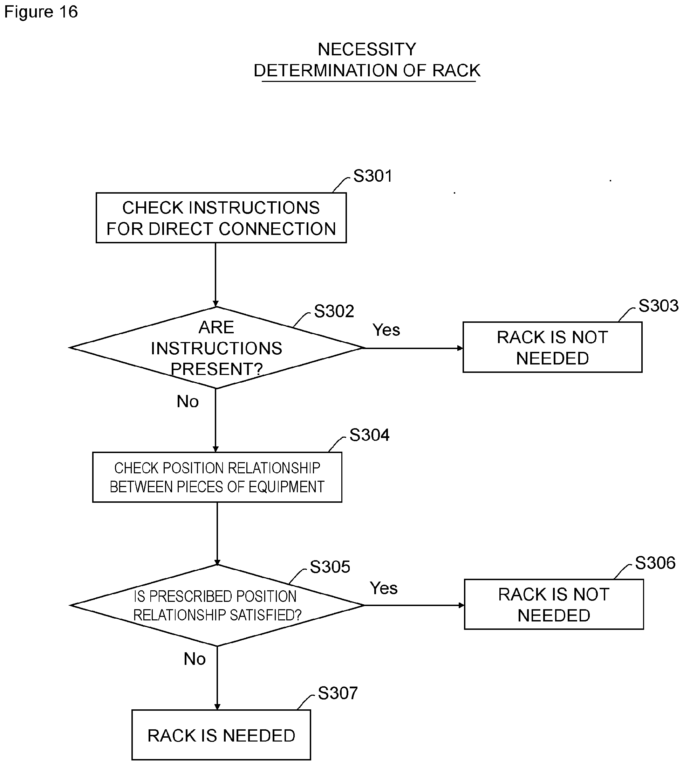

The routing module 2038 next performs necessity determination of a rack (step S1272). A process of the determination will be described in detail with reference to Figure 16. Figure 16 is a diagram illustrating the process of the necessity determination of a rack.

As illustrated in Figure 16, in the necessity determination of a rack, the user is asked whether to issue instructions for direct connection (step S301). The instructions for direct connection is stored as a pipe design parameter in the design parameter DB 2024.

When the instructions for direct connection are issued from the user (Yes in step S302), the routing module 2038 determines that no rack is needed in the routing (step S303). When the instructions for direct connection are not issued from the user (No in step S302), the routing module 2038 checks a position relationship between pieces of equipment to be connected together with a pipe (step S304).

Here, a prescribed position relationship between pieces of equipment is, for example, whether a distance in the longitudinal direction between the pieces of equipment is less than half a pitch, which is a unit element for dividing a length of a rack in the longitudinal direction.

That is, when a rack is used to route a pipe in the case where a pipe mounted in a rack has a short length, putting the pipe on the rack rather makes its connection structure complicated. Therefore, the pieces of equipment are to be directly connected with a pipe, or the pieces of equipment are to be connected with a pipe in such a manner that the pipe crosses the rack.

Note that the prescribed position relationship is not limited to a criterion of being less than half a pitch of a rack and may be set freely.

When the position relationship between the pieces of equipment satisfies the prescribed position relationship (Yes in step S305), the routing module 2038 determines that no rack is needed (step S306).

In contrast, when the position relationship between the pieces of equipment does not satisfy the prescribed position relationship (No in step S305), the routing module 2038 determines that a rack is needed.

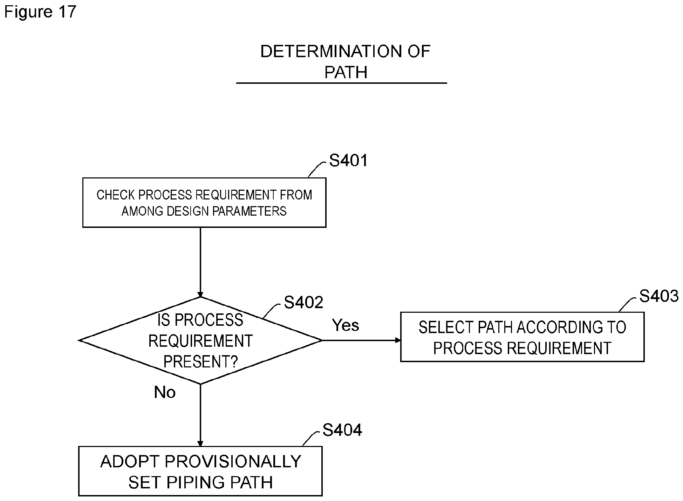

As illustrated in Figure 15, the routing module 2038 next determines the piping path (step S1273). That is, the routing module 2038 determines whether the piping path provisionally set in step S125 described above is adopted or whether another path is adopted as a piping path. A process of determining the piping path will be described in detail with reference to Figure 17. Figure 17 is a diagram illustrating the process in which the routing module 2038 determines the piping path.

As illustrated in Figure 17, in the determination of the piping path, the routing module 2038 checks whether any process requirement is present. Specifically, the routing module 2038 checks whether any process requirement input by the user is stored in the design parameter DB 2024.

When the routing module 2038 checks the presence of a process requirement (Yes in step S302), the routing module 2038 selects a new piping path according to the process requirement (step S403). In this case, the routing module 2038 performs a process of changing at least a part of the piping path provisionally set in step S125 such that the piping path becomes a path that satisfies the process requirement.

In contrast, when the routing module 2038 checks presence of no process requirement (No in step S302), the routing module 2038 adopts the piping path provisionally set in step S125 as a proper piping path (step S404).

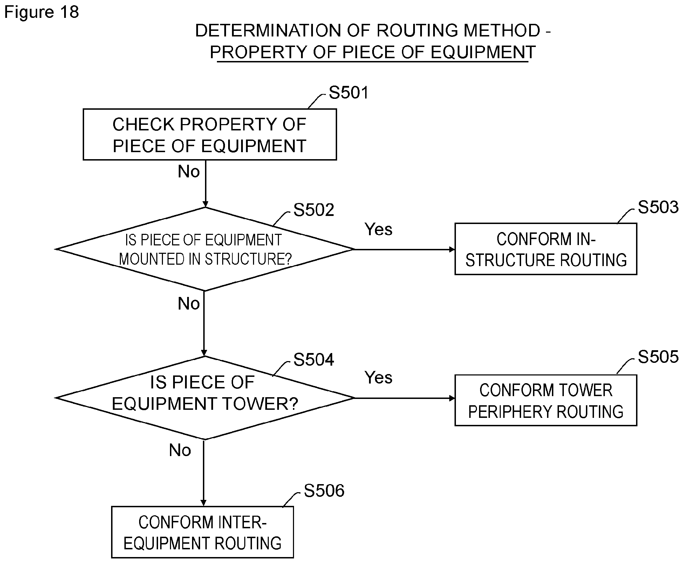

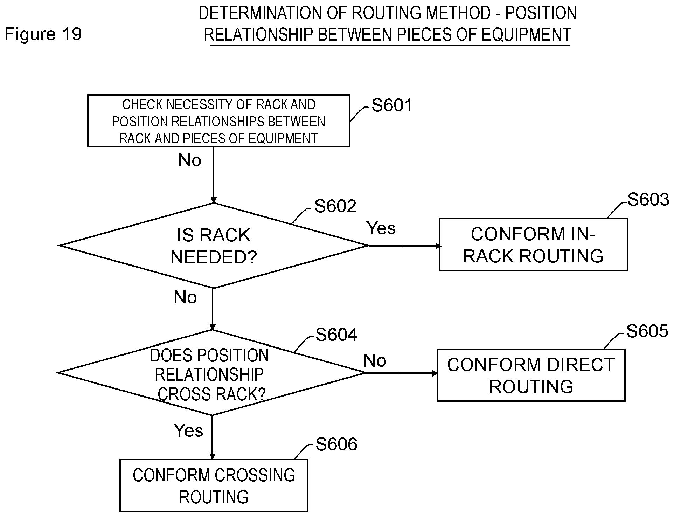

As illustrated in Figure 15, the routing module 2038 next determines a routing method (step S1274 and step S1275). A process of determination of a routing method will be described in detail with reference to Figure 18 and Figure 19. Figure 18 and Figure 19 are diagrams illustrating an approach for determining a routing method by the routing module 2038. Of these figures, Figure 18 is a chart illustrating a process of determining a routing method with properties of pieces of equipment.

As illustrated in Figure 18, the routing module 2038 checks properties of pieces of equipment to be connected with a pipe. The routing module 2038 first checks whether the piece of equipment is mounted in a structure (step S501). Specifically, the routing module 2038 checks the design parameter DB 2024 to check whether positions of a start point and an end point are on the structure.

Here, when the piece of equipment is mounted in the structure (Yes in step S502), the routing module 2038 adopts in-structure routing as a routing method (step S503). The in-structure routing will be described later in detail.

In contrast, when the piece of equipment is not mounted in the structure (No in step S502), the routing module 2038 checks whether the piece of equipment is a tower (step S504). Here, a tower (fourth object) refers to a column-shaped structure that is installed upright along a height direction, such as a distillation column.

When the piece of equipment is a tower (Yes in step S504), the routing module 2038 adopts tower periphery routing as a routing method (step S505). The tower periphery routing will be described later in detail.

In contrast, when the piece of equipment is not a tower (No in step S504), the routing module 2038 adopts inter-equipment routing as a routing method (step S506). The inter-equipment routing will be described later in detail.

Next, out of approaches for determining a routing method, an approach of selecting a routing method based on a position relationship between pieces of equipment will be described with reference to Figure 19. Figure 19 is a chart illustrating a process of determining a routing method based on a position relationship between pieces of equipment.

The routing module 2038 first checks necessity of a rack and a position relationships between the rack and pieces of equipment (step S601). When the pieces of equipment need no rack (Yes in step S602), the routing module 2038 adopts in-rack routing as a routing method (step S603). The in-rack routing will be described later in detail.

In contrast, when the pieces of equipment do not need a rack (No in step S602), the routing module 2038 checks position relationships between the rack and the pieces of equipment (step S604). Here, a longitudinal direction of the rack is set. When the longitudinal direction of the rack and a line connecting the pieces of equipment are orthogonal to each other, the two pieces of equipment are recognized as being at positions across the rack.

When the pieces of equipment are not in a position relationship in which the rack is between the pieces of equipment (No in step S604), the routing module 2038 adopts direct routing (step S605). The direct routing will be described later in detail.

In contrast, when the pieces of equipment are in a position relationship in which the rack is between the pieces of equipment (Yes in step S604), the routing module 2038 adopts crossing routing (step S606). The crossing routing will be described later in detail.

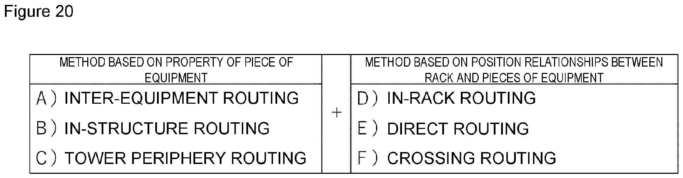

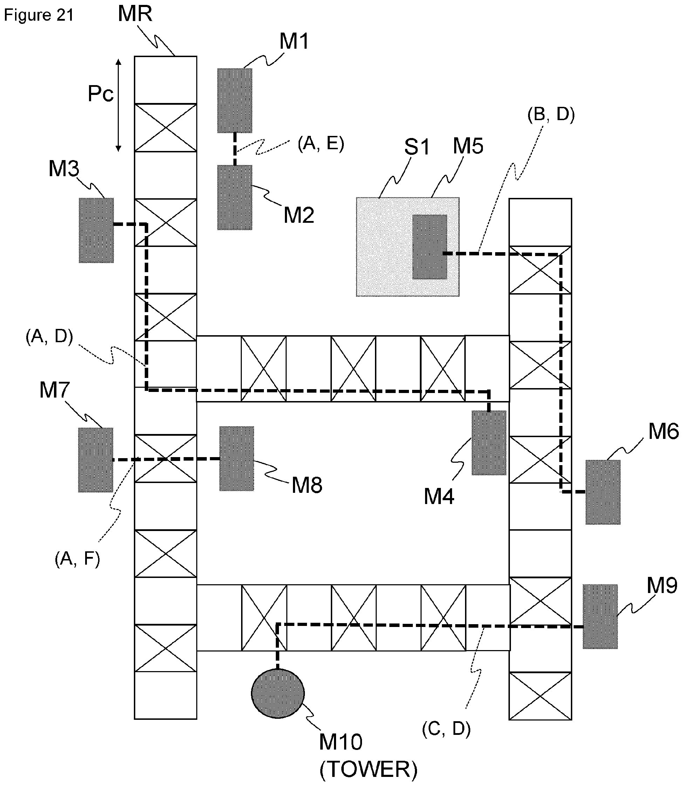

Next, various routing methods will be described. Figure 20 is a diagram for describing the various routing methods. Figure 21 is a diagram illustrating a state of various pieces of equipment that are routed by the various routing methods.

As illustrated in Figure 20, the routing methods are roughly classified by distinction based on properties of pieces of equipment and distinction based on a position relationship between a piece of equipment and a rack. Of these distinctions, the distinction based on properties of pieces of equipment relates to a routing method mainly for a periphery of a piece of equipment when the piece of equipment is connected to a pipe.

In contrast, the distinction based on a position relationship between a piece of equipment and a rack relates to a routing method for determining a path between pieces of equipment. That is, according to the flow of determination described above, the routing module 2038 selects one routing method from the left side of Figure 20 and one routing method from the right side of Figure 20, and performs the routing.

First, of the methods based on properties of pieces of equipment, "A) Inter-equipment routing" is a normal routing method. The inter-equipment routing is a routing method in which a pipe is connected to nozzles that are set to a start point and an end point of the pieces of equipment.

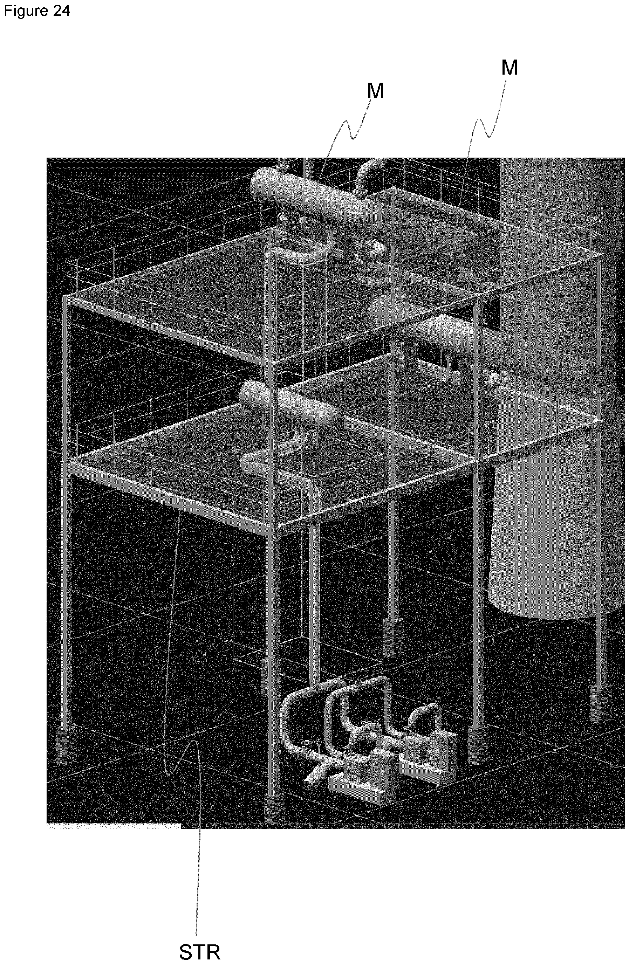

Next, of the methods based on properties of pieces of equipment, "B) In-structure routing" is a routing method that is adopted when any one of pieces of equipment to be connected with a pipe is mounted in a structure. Here, a structure (third object) refers to a structure in which a plurality of pieces of equipment are mounted in a plant, as illustrated in Figure 24. Figure 24 is a diagram illustrating appearance of a structure in a three-dimensional space. A structure STR illustrated in Figure 24 has a two-tiered structure, where pieces of equipment M are arranged in each tier. Examples of the pieces of equipment M include a heat exchanger and a pump.

In this routing method, the direct routing is not performed on a nozzle of a structure, but a pipe is routed with consideration given to a space necessary to place a support member laid in the structure. The support member is a member supporting a pipe and is constituted by, for example, channel steel materials, angle steel materials, and the like. The support member is laid to support a pipe in the structure. A size of the support member is stored in advance in the equipment database 2021. Although the support member is not modeled in the virtual space, a pipe is routed with consideration given to the size of the support member.

As illustrated in Figure 25, a piping layer PL is an imaginary space that is arranged in the structure STR and used for gathering up pipes. The piping layer PL defines, for example, a position in the height direction and a region in the width direction. The width direction refers to a breadth direction orthogonal to a direction in which pipes extends. The piping layer PL can be arranged at any location, not limited to inside the structure STR, in the virtual space.

The user can arrange the piping layer PL at any position inside the structure STR.

In the in-structure routing, the routing is performed in such a manner that heights of pipes are aligned along the piping layer PL.

The user can edit the region of the piping layer PL defined inside the structure STR in the width direction. For example, as illustrated in Figure 25(A), by editing, in the width direction, the piping layer PL extending over the entire structure STR in the width direction, the region of the piping layer PL is narrowed as illustrated in Figure 25(B).

By this editing, a plurality of pipes Pi arranged in the initial structure STR over the entire structure STR in the width direction are changed in position so that the pipes Pi fit into a region in the width direction defined by the piping layer PL. In other words, by editing the region in the width direction of the piping layer PL, the plurality of pipes in the structure STR can be bound within a given region.

When a height of the piping layer PL is changed, positions of the plurality of pipes Pi along the piping layer PL are changed in accordance with the position of the piping layer PL. As seen from the above, with a piping layer PL defining a height position and a region in the width direction of a plurality of pipes, beauty, workability, maintainability, and operability of the plurality of pipes can be ensured.

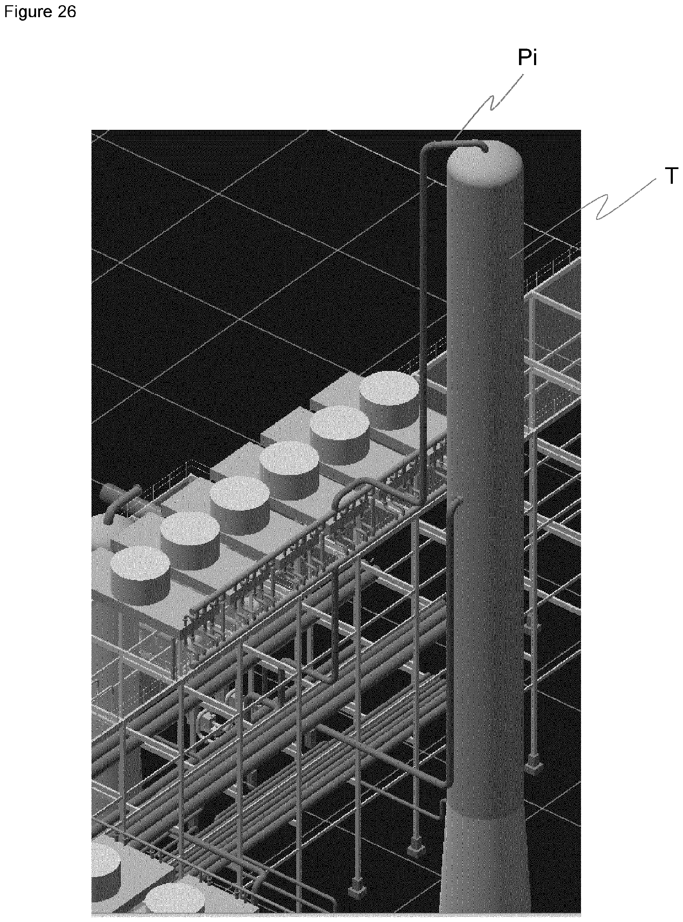

In "C) Tower periphery routing" illustrated in Figure 20, a pipe is routed in such a manner that the pipe extends in a height direction along an outer circumferential surface of a tower while the pipe extends toward a start/end point of the tower. Here, the start/end point represents a concept including a start point and an end point. Figure 26 is a diagram illustrating appearance of a tower in a three-dimensional space. As illustrated in Figure 26, a pipe Pi extends in a height direction along an outer circumferential surface of a tower T. The pipe Pi is routed with consideration given to a space necessary to place a pipe support member laid from the outer circumferential surface of the tower T. That is, the pipe Pi is routed in such a manner as to extend in the height direction along the outer circumferential surface of the tower T at a position radially outward of the outer circumferential surface of the tower T by a size of the support member.

Next, of the methods based on a position relationship between a piece of equipment and a rack, "D) In-rack routing" is a normal routing method. In the In-rack routing, a pipe is routed in such a manner as to be laid in a rack such that the pipe extends along a longitudinal direction of a pipe.

Next, in "E) Direct routing" illustrated in Figure 19, the routing is performed in such a manner that pieces of equipment are directly connected together with a pipe, without using a rack. That is, when a position relationship between pieces of equipment to be connected together with a pipe satisfies the prescribed position relationship, the pipe is directly routed to the pieces of equipment without passing through a rack.

Next, in "F) Crossing routing," a pipe is routed in such a manner that the pipe crosses a rack that is arranged between the two pieces of equipment. That is, in the case where a pipe is directly connected to pieces of equipment, when a rack is arranged between the pieces of equipment, the pipe is directly routed to the pieces of equipment, crossing the rack.

As illustrate in Figure 21, for a pipe that connects a piece of equipment M1 and a piece of equipment M2, "A) Inter-equipment routing" and "E) Direct routing" are adopted. This is because a distance between the piece of equipment M1 and the piece of equipment M2 is a distance that is shorter than half a pitch Pc of a rack.

For a pipe that connects a piece of equipment M3 and a piece of equipment M4, "A) Inter-equipment routing" and "D) In-rack routing" are adopted.

For a pipe that connects a piece of equipment M5 and a piece of equipment M6, "B) In-structure routing" and "D) In-rack routing" are adopted. This is because the piece of equipment M5 is mounted in a structure S1.

For a pipe that connects a piece of equipment M7 and a piece of equipment M8, "A) Inter-equipment routing" and "F) Crossing routing" are adopted. This is because the piece of equipment M7 and the piece of equipment M8 are arranged at positions across a main rack MR.

For a pipe that connects a piece of equipment M9 and a piece of equipment M10, "C) Tower periphery routing" and "D) In-rack routing" are adopted.

As illustrated in Figure 15, the routing module 2038 then performs the pipe routing using the selected routing methods (step S1276). In the pipe routing, a pipe is routed to selected two pieces of equipment with a position of the determined path, the information concerning the positions of the start point and the end point input as the pipe design parameters, and other design parameters including the process requirement and the like. That is, in routing of pipes, the routing module 2038 connects a plurality of pieces of equipment with the pipes according to the pipe design parameters and the other parameters.

The operation screen on the terminal device 10 at this time will be described with reference to Figure 21. Figure 21 is a diagram illustrating an example of the operation screen when a process of the routing is performed.

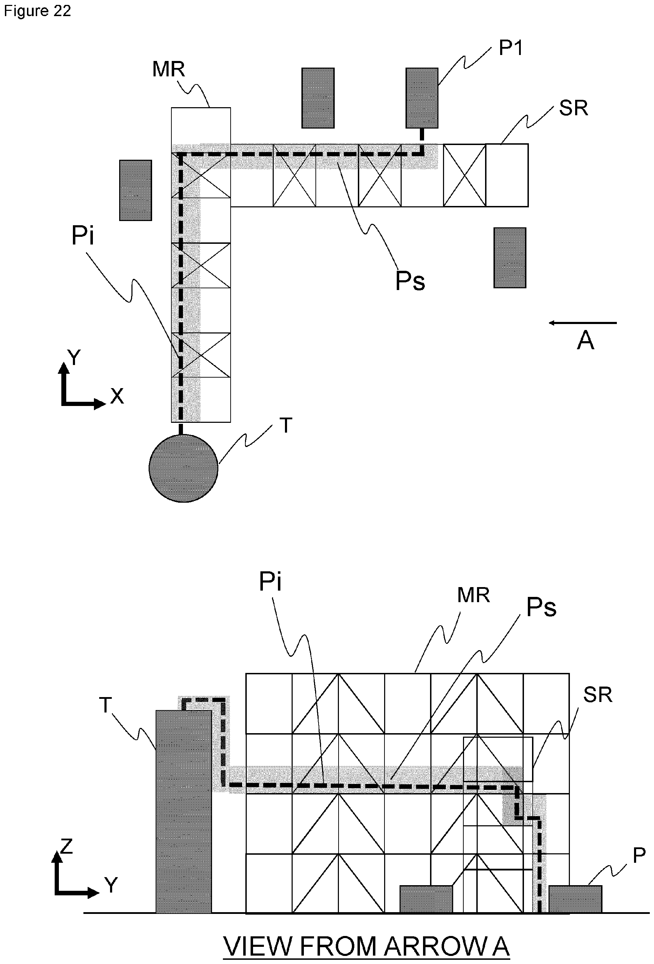

Figure 22 is a diagram illustrating an example of the operation screen on the terminal device 10 when the pipe routing is performed. As illustrated in Figure 22, by performing the pipe routing, a pipe Pi that connects a tower T and a pump P1 is displayed. Thus, the process of the pipe routing by the routing system is finished.

Next, routing approaches with consideration given to other design parameters will be described. The other design parameters mainly include "fluid state," "fluid temperature," "insulating material type and thickness," "priority," "pipe diameter," "process requirement," and "group." These pieces of information are input and stored in the design parameter DB 2024 when the pipe design parameters are defined. According to the specified design parameters, the routing module 2038 performs routing in conformity to a constraint that is predefined based on a type of a pipe to be routed. These pieces of information may be input in step S114, where the design parameters are input, or may be additionally input after step S115, where the path is once displayed.

"Fluid state" is information for specifying a connection direction of a pipe at a branch point. In general, in a case where a fluid is a gas (V) or a mixture (VL) of a gas and a liquid, a connecting part is set upward so that a branch pipe is drawn out from an upper portion of a main pipe. In contrast, in a case where a fluid is a liquid (L), a connecting part is set downward so that a branch pipe is drawn out from a lower portion of a main pipe. In this manner, the routing module 2038 adjusts a vertical direction of a pipe that extends from a rack to a start/end point of a piece of equipment based on a type of a pipe to be routed.

"Fluid temperature" is information for specifying a distance between pipes adjacent to each other. In addition, the routing is performed in such a manner that pipes having close fluid temperatures become adjacent to each other.

"Insulating material type and thickness" is information for setting a practical diameter of a pipe.

"Priority" is information for specifying a priority in routing. The routing module 2038 determines a turn of a pipe for routing according to a priority that is preset to the pipe to be routed, with a relation with other pipes taken into account.

"Pipe diameter" is information for specifying a priority. An initial value of the priority is set in such a manner that a higher value is set to a pipe having a larger diameter than a pipe having a smaller diameter.

"Process requirement" is a constraint condition concerning information on a vertical shape of a path that extends from its start point to its end point. The process requirement includes "Gravity Flow," "No Pockets," "No Liquid Pocket," "No Vapor Pocket," and the like.
"Gravity Flow" refers to a path that can have any intermediate path as long as a height of a start point of the path is equal to or higher than an end point of the path.
"No Pockets" refers to a path that have no Low Pockets and High Pockets between a start point and an end point of the path. Low Pockets refers to a path that has a downward vertical pipe followed by an upward vertical pipe in a flowing direction. High Pockets refers to a path that has an upward vertical pipe followed by a downward vertical pipe in a flowing direction.
"No Liquid Pocket" refers to a path that has no Low Pockets, that is, a path that has no liquid pocket.
"No Vapor Pocket" refers to a path that has no High Pockets, that is, a path that has no gas pocket.

As the process requirement, a condition other than the conditions described above may be included.

Based on an input process requirement, the routing module 2038 determines a connection structure of a pipe.

"Group" forms the same pipe system. "Group" specifies positions of pipes to be routed in such a manner that pipes to be close to one another are arranged collectively. The routing module 2038 routes a plurality of pipes forming the same pipe system in such a manner that the pipes are adjacent to one another.

"Head Clearance" is information for specifying a height of the lowest portion of a pipe from the ground. For example, the head clearance is input in a case where, for example, a sufficient vertical space is kept above a passage for people to pass through. The routing module 2038 routes a pipe in such a manner that the pipe satisfies the head clearance.

As described above, the pipe routing system 1 of the present embodiment receives a specification of a layer of a rack in which a pipe is to be laid, sets a piping path that indicates a spatial path through which a pipe is arranged, and routes a pipe between two pieces of equipment that are selected from among a plurality of pieces of equipment arranged in a virtual space. Therefore, a routing route can be determined in a state where layer positions in a rack are grasped.

As a result, an operation of routing pipes that connect various pieces of equipment can be examined for each tier of a rack.

The routing module 2038 checks, for each rack, a distance between a start point and an end point in a direction orthogonal to a longitudinal direction of the rack, determines a rack that is closest to the start point and the end point, and sets a piping path. As a result, an optimal rack to be used can be accurately determined based on positions of the start point and the end point.

The server 20 displays an editing screen that displays a type of a pipe to be arranged for each layer of a rack. As a result, a user can easily performs an editing operation of a layer of a rack.

The editing screen displays occupancies of each of types of pipes to be arranged for each layer of the rack. As a result, a user can check the occupancies of each of the types of pipes to be arranged in a layer to accurately grasp what pipes are arranged and how much is occupied by each pipe, which contributes to the piping design.

The routing module 2038 performs routing in conformity to a constraint that is predefined based on a type of a pipe to be routed. As a result, by inputting various constraint conditions, a variety of requirements that should be considered in routing can be met.

The routing module 2038 adjusts a vertical direction of a pipe that extends from a rack to a start/end point of a piece of equipment based on a state of a fluid to flow through a pipe to be routed. As a result, appropriate routing of a pipe can be performed with consideration given to the fluid state.

Based on a constraint condition concerning a vertical position relationship in a path that extends from an input start point to an end point, the routing module 2038 determines a connection structure of a pipe. As a result, useful routing of a pipe in accordance with actuality of pipe routing can be performed.

The routing module 2038 determines a turn of a pipe for routing according to a priority that is preset to the pipe to be routed, with a relation with other pipes taken into account. As a result, by performing the routing a pipe having a high priority on a priority basis, convenience for a user can be ensured.

An initial value of the priority is set in such a manner that a higher value is set to a pipe having a larger diameter than a pipe having a smaller diameter. As a result, a design with a reduced construction costs can be achieved.

The routing module 2038 routes a plurality of pipes forming the same pipe system in such a manner that the pipes are adjacent to one another. As a result, convenience for a user can be ensured.

When a piece of equipment is mounted in a structure, the routing module 2038 routes a pipe with consideration given to a space necessary to place a support member laid in the structure. As a result, routing can be performed for a piece of equipment mounted in a structure.

When a piece of equipment is a tower, the routing module 2038 routes a pipe in such a manner that the pipe extends in a height direction along an outer circumferential surface of a tower while the pipe extends toward a start/end point of the tower. As a result, by supporting the pipe connected to the tower on the outer circumferential surface of the tower, a strength of the pipe can be ensured while the number of supports for the pipe is reduced.

When a position relationship between pieces of equipment to be connected together with a pipe satisfies the prescribed position relationship, the routing module 2038 directly routes the pipe to the pieces of equipment without passing through a rack. As a result, the pipe can be prevented from becoming unnecessarily long, and routing of a low-cost pipe can be performed.

In the case where a pipe is directly connected to pieces of equipment, when a rack is arranged between the pieces of equipment, the routing module 2038 directly routes the pipe to the pieces of equipment, crossing the rack. As a result, the pipe can be prevented from becoming unnecessarily long, and routing of a low-cost pipe can be performed.

Layers of the main rack are at different heights from layers of the sub rack. As a result, a pipe can be connected from the main rack to the sub rack while a height of the pipe is changed. Therefore, a structure of a connecting part of the pipe extending from the main rack to the sub rack can be simplified.

### <Modifications>

Next, pipe routing according to a modification will be described. In this modification, a process of performing routing with one or some of preset pipe design parameters excluded will be described. Specifically, the parameter input receiving module of the control unit 203 receives, before step S127 illustrated in Figure 11, a specification of at least one parameter that is to be disabled in the routing. At this time, a user selects, on the operation screen, one or some of parameters used for performing the pipe routing as parameters to be disabled. The parameters selected at this time include a parameter included in the pipe design parameters (e.g., instructions for direct connection, a process requirement, etc.), a type of a piece of equipment (a distinction between tower and structure), and a condition of whether to use a rack.

Then, in the pipe routing process (step S127), the routing module 2038 performs routing of a pipe without consideration given to the parameter specified to be disabled.

Specifically, for example, when instructions for the direct connection are disabled, the routing module 2038 ignores the parameter of the instructions for the direct connection in checking instructions for the direct connection illustrated in Figure 16 (step S301) even when the instructions for the direct connection are stored in the design parameter DB 2024. That is, determining that the instructions for the direct connection are disabled, the routing module 2038 performs the process of step S304.

In addition, for example, when a parameter concerning a process requirement is disabled, the routing module 2038 ignores the parameter in step S401 illustrated in Figure 17 even when the process requirement is stored in the design parameter DB 2024. That is, determining that there is not process requirement, the routing module 2038 performs the process of step S404.

In addition, for example, when a parameter that specifies a piece of equipment as a tower is disabled as a parameter concerning a type of a piece of equipment, the routing module 2038 ignores the parameter even when a piece of equipment to be connected is a tower. That is, the routing module 2038 performs routing of a pipe, not complying with the tower periphery routing. This holds true for the case where a parameter concerning a type of a piece of equipment is specified to be a structure.

In addition, for example, when not using a rack is selected, the routing module 2038 ignores the parameter even when it is already determined in step S601 illustrated in Figure 19 that a rack is needed. That is, the routing module 2038 performs routing of a pipe, using no rack.

As a result, for example, when a provisional routing is to be performed in a case where a length of a pipe is estimated in an stage of estimating construction costs, routing of a pipe can be performed with one or some of the various parameters used for the pipe routing being disabled. As a result, a load of computation can be reduced, and information desired by a user can be smoothly provided.

In addition, in a case where a user examines routing paths in a trial-and-error manner, performing the routing of a pipe with one or some of the various parameters being disabled can propose various routing paths, thus enabling improvement in convenience for the user.

The embodiment according to the disclosure are described above. This embodiment can be embodied in other various forms and can be embodied with various omissions, substitutions, and changes. This embodiment and modifications as well as those subjected to the omissions, substitutions, and changes are included in the technical scope of claims and the scope of equivalents thereof.

Further, an order of the processes can be changed to the extent that the order is not inconsistent.

### [Reference Signs List]

1 pipe routing system 1
10 terminal device
20 server
80 network
130 operation receiving unit
161 user information
22 communication IF
23 input/output IF
25 memory
26 storage
29 processor
201 communication unit
202 storage unit
203 control unit
301 communication unit
302 storage unit
303 control unit

## Claims

1. A program to be executed by a computer including a processor, the program being for designing a plant, the program causing the processor to perform:
receiving a specification of a position of a rack in a virtual space;
receiving a setting of a pipe to be arranged in a layer indicating one of tiers into which the rack is partitioned in a height direction;
receiving, from a user, an operation of arranging a first object and a second object in the virtual space, the first object being a piece of equipment having a start point, the second object being a piece of equipment having an end point;
determining a passable layer based on a type of the pipe and setting a piping path through which the pipe is to pass; and
performing pipe routing to connect a plurality of the pieces of equipment with the pipe based on the piping path and positions of the start point and the end point.

2. The program according to claim 1, wherein
in the receiving of the specification of the position of the rack, a specification of a longitudinal direction of the rack is received, and
in the setting of the piping path, in a case where there are a plurality of the racks that are passable, distances between the racks and the start point and the end point in a direction orthogonal to the longitudinal direction are measured, a rack closest to the start point and the end point is determined, and the piping path is set.

3. The program according to claim 1 or 2, wherein
a setting of a pipe design parameter that is one of various conditions to be referred to when the pipe is routed is received, and
in the pipe routing, the plurality of the pieces of equipment are connected together with the pipe according to the pipe design parameter.

4. The program according to claim 3, wherein
a specification of at least one parameter that is to be disabled in the pipe routing out of the pipe design parameters that are preset is received, and
in the pipe routing, the pipe routing is performed without consideration given to the parameter specified to be disabled.

5. The program according to any one of claims 1 to 4, wherein in the receiving of the setting of the pipe, an editing screen that displays a type of a pipe to be arranged for each layer of the rack is displayed.

6. The program according to claim 5, wherein the editing screen displays an occupancy of each of types of pipes to be arranged for each layer of the rack.

7. The program according to any one of claims 1 to 6, wherein in the pipe routing, the routing is performed in conformity to a constraint that is predefined based on a type of a pipe to be routed.

8. The program according to any one of claims 1 to 7, wherein in the pipe routing, a vertical direction of the pipe that extends from the rack to a start/end point of a piece of equipment is adjusted based on a state of a fluid to flow through the pipe to be routed.

9. The program according to any one of claims 1 to 8, wherein in the pipe routing, based on a constraint condition concerning a vertical position relationship in a path that extends from an input start point to an end point, a connection structure of the pipe is determined.

10. The program according to any one of claims 1 to 9, wherein in the pipe routing, a turn of a pipe for routing is determined according to a priority that is preset to the pipe to be routed, with a relation with another pipe taken into account.

11. The program according to claim 10, wherein an initial value of the priority is set in such a manner that a higher value is set to a pipe having a larger diameter than a pipe having a smaller diameter.

12. The program according to any one of claims 1 to 11, wherein in the pipe routing, a plurality of pipes forming a same pipe system are routed in such a manner that the pipes are adjacent to one another.

13. The program according to any one of claims 1 to 12, the program causing the processor to perform:
receiving, from a user, an operation of arranging a third object in the virtual space, the third object being a structure in which the piece of equipment is mounted in the plant;
receiving an arrangement of a piping layer that defines a position of a pipe to be laid in the structure, the position being in a height direction; and
in the pipe routing, performing pipe routing in such a manner that heights of pipes are aligned along the piping layer.

14. The program according to claim 13, wherein editing of a region of the piping layer defined in the structure is received, the editing being in the width direction.

15. The program according to any one of claims 1 to 14, the program causing the processor to perform:
receiving, from a user, an operation of arranging a fourth object in the virtual space, the fourth object being a tower that is installed upright along a height direction in the plant; and
in the pipe routing, in a case where the piece of equipment is the tower, performing pipe routing in such a manner that the pipe extends in a height direction along an outer circumferential surface of the tower while the pipe extends toward a start/end point of the tower.

16. The program according to any one of claims 1 to 15, wherein in the pipe routing, when a position relationship between pieces of equipment to be connected together with the pipe satisfies a prescribed position relationship, the pipe is directly routed to the pieces of equipment without passing through the rack.

17. The program according to claim 16, wherein in a case where a pipe is directly connected to the pieces of equipment, when the rack is arranged between the pieces of equipment, the pipe is directly routed to the pieces of equipment, crossing the rack.

18. The program according to any one of claims 1 to 17, wherein
the rack includes a main rack the longitudinal direction of which extends in a reference direction and a sub rack the longitudinal direction of which extends along a direction orthogonal to the reference direction, and
a layer of the main rack is at a different height from a layer of the sub rack.

19. A method to be executed by a computer including a processor, the method being for designing a plant, the method causing the processor to perform:
receiving a specification of a position of a rack in a virtual space;
receiving a setting of a pipe to be arranged in a layer indicating one of tiers into which the rack is partitioned in a height direction;
receiving, from a user, an operation of arranging a first object and a second object in the virtual space, the first object being a piece of equipment having a start point, the second object being a piece of equipment having an end point;
determining a passable layer based on a type of the pipe and setting a piping path through which the pipe is to pass; and
performing pipe routing to connect a plurality of the pieces of equipment with the pipe based on the piping path and positions of the start point and the end point.

20. A system for designing a plant, the system including a control unit, wherein
the control unit includes:
a module that receives a specification of a position of a rack in a virtual space;
a module that receives a setting of a pipe to be arranged in a layer indicating one of tiers into which the rack is partitioned in a height direction;
a module that receives, from a user, an operation of arranging a first object and a second object in the virtual space, the first object being a piece of equipment having a start point, the second object being a piece of equipment having an end point;
a module that determines a passable layer based on a type of the pipe and sets a piping path through which the pipe is to pass; and
a module that performs pipe routing to connect a plurality of the pieces of equipment with the pipe based on the piping path and positions of the start point and the end point.
